(19)

Europäisches
Patentamt
European
Patent Office
Office européen
des brevets

(11) **EP 2 391 144 A1**

(12) **EUROPEAN PATENT APPLICATION**
published in accordance with Art. 153(4) EPC

(43) Date of publication:
**30.11.2011  Bulletin 2011/48**

(51) Int Cl.:
*H04N 13/04* (2006.01)      *G02F 1/13* (2006.01)
*G02F 1/133* (2006.01)      *G09F 9/00* (2006.01)
*G09G 5/12* (2006.01)       *G09G 5/36* (2006.01)

(21) Application number: **10834483.9**

(22) Date of filing: **17.11.2010**

(86) International application number:
**PCT/JP2010/070488**

(87) International publication number:
**WO 2011/068031 (09.06.2011 Gazette 2011/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **04.12.2009  JP 2009276948
29.03.2010  JP 2010076331**

(71) Applicant: **Sony Corporation
Tokyo 108-0075 (JP)**

(72) Inventors:
• **TSURUMOTO, Takashi
Tokyo 108-0075 (JP)**

• **SATOH, Yoshinori
Tokyo 108-0075 (JP)**
• **YAMASAKI, Takayoshi
Tokyo 108-0075 (JP)**
• **KIKUCHI, Kazunori
Tokyo 108-0075 (JP)**

(74) Representative: **Mills, Julia
D Young & Co LLP
120 Holborn
London EC1N 2DY (GB)**

(54) **VIDEO DISPLAY DEVICE, SHUTTER GLASSES, VIDEO DISPLAY SYSTEM, AND COMMUNICATION METHOD**

(57)      Shutter glasses include: shutters transmitting or blocking video displayed with a specified display interval on a video display device by performing opening/closing operations based on control information; a clock counter 261; a reception portion (RF communication portion 234, reception-side count value latch circuit 262, reception-side count value storage portion 464a, 464b, count value acquiring portion 263, and transmission-side count value storage portion 465a, 465b) acquiring, as a reception time count value, a value of the clock counter for when a transmission time count value based on a value of an internal clock counter of the video display device was received from the video display device; and a control portion (power control unit 443) setting intermittent reception time slots in which the reception portion receives the control information from the video display device, based on the transmission time count value and the reception time count value.

FIG. 7

**Description**

Technical Field

The present invention relates to a video display system that uses shutter glasses, and a video display device, shutter glasses, and communication method favorably used in such a system.

Background Art

A video display device adapting a time-division driving method is a video display device that sequentially switches and outputs a plurality of video streams in a time division manner. The video display devices that adopt this type of time division driving method include time-division stereoscopic video display systems using shutter glasses (as described, for example, in Japanese Patent Application Publication No. JP-A-9-138384, Japanese Patent Application Publication No. JP-A-2000-36969 and Japanese Patent Application Publication No. JP-A-2003-45343) and multi-video display systems in which a plurality of viewers using shutter glasses view different video without division ova screen, and so on.

A time-division stereoscopic video display system is a video display system in which video for the left eye and video for the right eye are alternately displayed on an entire screen at very short intervals. At the same time, the system uses a stereoscopic video display device that separates the video and provides the video to the left eye and the video to the right eye in synchronization with the display interval of the video for the left eye and the video for the right eye. For example, when using the shutter glasses method, during a period in which the video for the left eye is displayed, a left eye portion of the shutter glasses allows light to pass through, while a right eye portion is blocked. Then, during a period in which the video for the right eye is displayed, the right eye portion of the shutter glasses allows light to pass through, and the left eye portion is blocked.

With respect to the HDMI1.4 standard, examples of stereoscopic video signal methods include frame packing, side by side and so on. These methods output and input signals including information of video for the left eye and video for the right eye mainly at 24 Hz, 50 Hz and 60 Hz. In the case of the time-division method, with respect to the above-described 24 Hz, 50 Hz and 60 Hz signals, the stereoscopic video display device performs time-divided display of the video for the left eye and the video for the right eye respectively at 96 Hz, 100 Hz and 120 Hz, and the shutter glasses perform opening and closing operations of the liquid crystal shutter at 48 Hz, 50 Hz and 60 Hz, respectively.

In this way, in a time-division stereoscopic video display system, it is necessary to separately provide video to the left eye and the right eye in synchronization with the display intervals of the video for the left eye and the video for the right eye and necessary to give notification of the opening/closing timing of the shutters of the shutter glasses from the video display device.

Citation List

Patent Literature

| | |
|---|---|
| Patent Literature 1: | JP H09-138384A |
| Patent Literature 2: | JP 2000-36969A |
| Patent Literature 3: | JP 2003-45343A |

Summary of Invention

Technical Problem

When information on the opening/closing timing of the shutters and the like is transmitted and received between the video display device and the shutter glasses, it is normally necessary for transmission/reception circuits to operate aside from when the transmission and reception are actually being carried out. This often leads to an increase in power consumption by the video display device and/or the shutter glasses.

More specifically, methods that use infrared communication and radio communication are conceivable examples of methods of giving notification of the opening/closing timing of the shutters of the shutter glasses from the video display device. One specific example of a method that uses radio communication is a method that uses a standard, such as IEEE 802.15.4, used in radio communication between a video display device and a remote controller that remotely controls the video display device. However, in cases where the opening/closing timing of the shutters of the shutter glasses has always been transferred simply by radio communication, there has been the problem that this leads to an increase in power consumption as described above. '

The present invention was conceived in view of the problem described above and aims to provide a video display device, shutter glasses, video display system, and communication method that are capable of suppressing power consumption.

Solution to Problem

A video display device according to the present invention includes a display portion, a clock counter, and a transmission portion. The display portion displays video according to time division with a specified display interval. The transmission portion transmits a transmission time count value which is based on a value of the clock counter and is to be used, by shutter glasses that transmit or block display video of the display portion by performing opening/closing operations based on control information received in intermittent reception time slots, to set the reception time slots.

Shutter glasses according to the present invention include shutters, a clock counter, a reception portion, and a control portion. The shutters transmit or block video displayed with a specified display interval on a video display device by performing opening/closing operations based on control information. The reception portion acquires, as a reception time count value, a value of the clock counter for when a transmission time count value based on a value of an internal clock counter of the video display device was received from the video display device. The control portion sets intermittent reception time slots in which the reception portion receives the control information from the video display device, based on the transmission time count value and the reception time count value.

The video display system according to the present invention includes the video display device according to the present invention and the shutter glasses according to the present invention described above.

A communication method according to the present invention includes: transmitting, by a video display device which displays video, a transmission time count value based on a value of a clock counter; and acquiring, by shutter glasses which transmit or block display video of the video display device by performing opening/closing operations based on control information received in intermittent reception time slots, a value of a clock counter of the shutter glasses when the transmission time count value from the video display device is received as a reception time count value and setting the intermittent reception time slots where the reception portion receives the control information from the video display device based on the transmission time count value and the reception time count value.

With the video display device, the shutter glasses, the video display system, and the communication method according to the present invention, the transmission time count value is transmitted from the video display device to the shutter glasses. At the shutter glasses, reception time slots are set based on the transmission time count value and the reception time count value acquired corresponding thereto. The shutter glasses then intermittently receive control information transmitted from the video display device using such reception time slots and operate so as to enter a sleep state at other times.

With the video display device according to the present invention, it is preferable for example for the control information to include an opening/closing timing value based on the value of the clock counter for indicating opening/closing timing of the shutter glasses. In such case, the transmission portion should preferably transmit the opening/closing timing value with a longer interval than the display interval, for example.

As one example, the transmission portion may transmit the opening/closing timing value together with the transmission time count value. Also, for example, the transmission portion may transmit the transmission time count value to the shutter glasses based on a request from the shutter glasses.

For the shutter glasses according to the present invention, as one example, the control information should preferably include a first opening/closing timing value which is based on a value of the internal clock counter of the video display device and is used to indicate opening/closing timing of the shutter glasses. In such case, the reception portion should preferably receive the first opening/closing timing value with a longer interval than the display interval, for example.

The reception portion may receive the first opening/closing timing value together with the transmission time count value from the video display device, for example. In such case, the shutter glasses may further include an opening/closing timing calculation portion converting, based on the transmission time count value and the reception time count value, the first opening/closing timing value received by the reception portion to a second opening/closing timing value based on the value of the clock counter, and the shutters may carry out opening/closing operations based on the second opening/closing timing value. As one example, the reception portion may be capable of operating in a continuous reception mode where reception is always possible and operable when the reception portion has received the transmission time count value consecutively a specified number of times in the continuous reception mode, to move to an intermittent reception mode where a reception operation is carried out in the intermittent reception time slots. Also, the reception portion may be operable when reception was not possible a specified number of times consecutively in the intermittent reception mode, to move to the continuous reception mode, for example.

As one example, the control portion may be operable after the reception portion has received the transmission time count value from the video display device at least twice, to find a next transmission timing from the video display device based on the transmission time count value and the reception time count value and set the reception time slots. For example, the reception portion may hold the transmission time count value received once every specified number of times and the reception time count value corresponding thereto multiple times together with the transmission time count value received last and the reception time count value corresponding thereto, and the control portion may use the transmission time count value and the reception time count value corresponding to a first and last reception out of the plurality of the transmission time count values and the reception time count values held by the reception portion to find a next transmission timing from the video display device and set the reception time slots. In such case, the number of times the transmission time count value and the reception time count value are held can be set at three, for example.

As one example, the shutter glasses according to the present invention may further include: a frequency synchronization processing portion carrying out processing, based on the transmission time count value and the reception time count value, to make a clock frequency of the frequency synchronization processing portion match a clock frequency of the video display device; and a counter setting portion matching a value of the clock counter to a value of the internal clock counter of the video display device. The shutter glasses described above may for example include a synchronization requesting portion requesting synchronization of clock frequencies with the video display device to the video display device, and the frequency synchronization processing portion may carry out processing based on the transmission time count value transmitted by the video display device based on a request from the synchronization requesting portion, and the reception time count value corresponding to the transmission time count value. As one example, the reception portion may operate in continuous reception mode where reception is always possible during a period where the value of the clock counter does not match the value of the internal clock counter of the video display device.

As one example, the counter setting portion may be operable when the reception portion could not receive the first opening/closing timing value from the video display device consecutively a specified number of times, to request the video display device to transmit the first opening/closing timing value. The synchronization requesting portion may for example be operable when the first opening/closing timing value could not be received from the video display device even when the counter setting portion has requested a specified number of times consecutively, to again request the video display device for synchronization of the clock frequencies.

The reception portion may for example receive, from the video display device and together with the first opening/ closing timing value, an open time value which is based on the value of the internal clock counter of the video display device and indicates an open time of the shutters.

The reception portion may for example receive the first opening/closing timing value from the video display device by radio communication. The radio communication mentioned above may conform to IEEE 802.15.4 standard, for example.

Advantageous Effects of Invention

According to the video display device, the shutter glasses, the video display system, and the communication method according to the present invention, since intermittent reception time slots are provided when receiving control information from the video display device, it is possible to suppress power consumption of the shutter glasses.

Brief Description of Drawings

[Fig. 1] Fig. 1 is a diagram useful in showing one example structure of a video display system according to embodiments of the present invention.
[Fig. 2] Fig. 2 is a block diagram showing one example structure of a display device according to a first embodiment of the present invention.
[Fig. 3] Fig. 3 is a block diagram showing an example structure of a shutter control portion according to the video display system according to the first embodiment.
[Fig. 4] Fig. 4 is a timing waveform chart useful in explaining a standard synchronization signal according to the first embodiment.
[Fig. 5] Fig. 5 is a block diagram showing one example structure of a main part of a shutter control portion according to the first embodiment.
[Fig. 6] Fig. 6 is a diagram useful in showing one example structure of the video display system according to the first embodiment.
[Fig. 7] Fig. 7 is a diagram useful in explaining one example of opening/closing timing of shutter glasses according to the first embodiment.

[Fig. 8] Fig. 8 is a flowchart showing one example operation of the video display system according to the first embodiment.

[Fig. 9] Fig. 9 is a sequence chart showing one example operation of the video display system according to the first embodiment.

[Fig. 10] Fig. 10 is a block diagram showing one example structure of a shutter control portion of a display device according to a second embodiment.

[Fig. 11] Fig. 11 is a block diagram showing one example structure of a shutter control portion of shutter glasses according to the second embodiment.

[Fig. 12] Fig. 12 is a diagram useful in showing one example structure of a regular packet according to the second embodiment.

[Fig. 13A] Fig. 13A is a diagram useful in explaining one example structure of the synchronization information shown in Fig. 12.

[Fig. 13B] Fig. 13B is a diagram useful in explaining one example structure of the synchronization information shown in Fig. 12.

[Fig. 13C] Fig. 13C is a diagram useful in explaining one example structure of the synchronization information shown in Fig. 12.

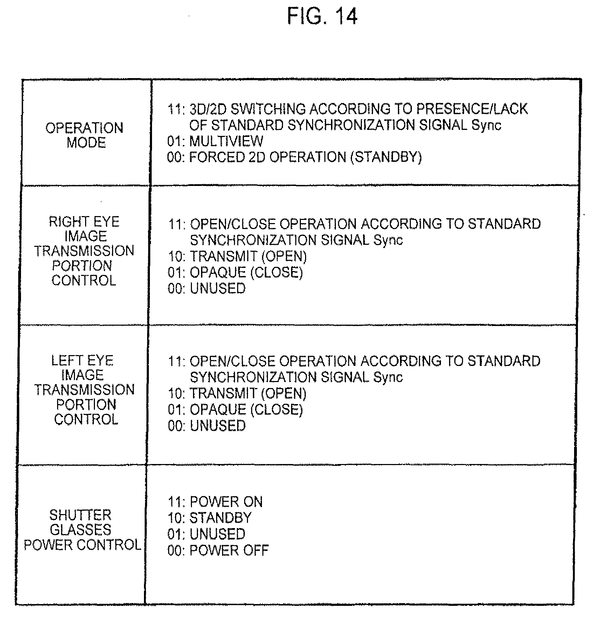

[Fig. 14] Fig. 14 is a table useful in explaining one example structure of the control information shown in Fig. 12.

[Fig. 15] Fig. 15 is a diagram useful in showing one example structure of registers relating to the shutter control portion shown in Fig. 11.

[Fig. 16] Fig. 16 is a sequence chart showing one example operation of the video display system according to the second embodiment.

[Fig. 17] Fig. 17 is a sequence chart showing another example operation of the video display system according to the second embodiment.

[Fig. 18] Fig. 18 is a sequence chart showing another example operation of the video display system according to the second embodiment.

[Fig. 19] Fig. 19 is a flowchart showing one example operation of the video display system according to the second embodiment.

[Fig. 20] Fig. 20 is a diagram useful in explaining transmission and reception of regular packets according to the second embodiment.

[Fig. 21] Fig. 21 is a flowchart showing another example operation of the video display system according to the second embodiment.

[Fig. 22] Fig. 22 is a flowchart showing another example operation of the video display system according to the second embodiment.

[Fig. 23] Fig. 23 is a block diagram showing one example structure of the shutter control portion of the shutter glasses according to a modification to the second embodiment.

[Fig. 24] Fig. 24 is a timing waveform chart for explaining a standard synchronization signal according to a modification.

[Fig. 25] Fig. 25 is a timing waveform chart for explaining a standard synchronization signal according to another modification.

[Fig. 26A] Fig. 26A is a schematic diagram showing one example operation of a video display system according to a modification.

[Fig. 26B] Fig. 26B is a schematic diagram showing one example operation of a video display system according to a modification.

Description of Embodiments

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

Note that the description will be given in the order shown below.

1. The First Embodiment
2. The Second Embodiment

1. The First Embodiment

Example Structure

Structure of Video Display System

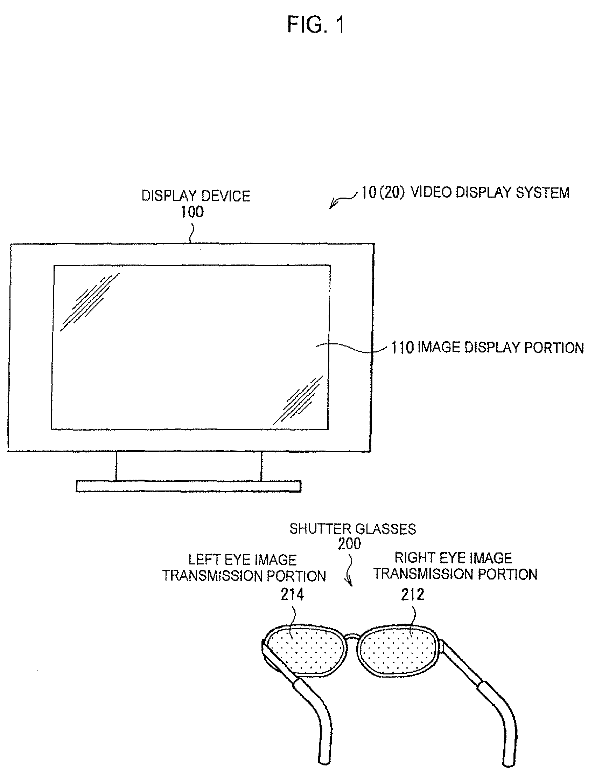

A video display system according to a first embodiment of the present invention is described below. First, the structure of the video display system will be described. FIG. 1 shows an example structure of a video display system 10. FIG. 1 also shows a display device 100, and shutter glasses 200 used to cause a viewer to perceive images displayed by the display device 100 as stereoscopic images. The video display system 10 is composed of the display device 100 and the shutter glasses 200.

The display device 100 shown in FIG. 1 is provided with an image display portion 110 that displays images. The display device 100 does not only display normal images on the image display portion 110, but can also display three dimensional images on the image display portion 110 that are perceived by the viewer as stereoscopic images.

The structure of the image display portion 110 will be explained in more detail later. As a simple description here, the image display portion 110 includes a light source, a liquid crystal panel and a pair of polarizing plates that sandwich the liquid crystal panel. Light from the light source is polarized in a predetermined direction by passing through the liquid crystal panel and a pair of polarizing plates.

The shutter glasses 200 include a right eye image transmission portion 212 and a left eye image transmission portion 214, which are liquid crystal shutters, for example. The shutter glasses 200 perform opening and closing operations of the right eye image transmission portion 212 and the left eye image transmission portion 214, which are formed of liquid crystal shutter respectively, in response to a signal transmitted from the display device 100. The opening and closing operations of the right eye image transmission portion 212 and the left eye image transmission portion 214 are performed by a shutter control portion 210 (later described). The viewer can perceive an image displayed on the image display portion 110 as a stereoscopic image, by looking at the light emitted from the image display portion 110 through the right eye image transmission portion 212 and the left eye image transmission portion 214 of the shutter glasses 200.

On the other hand, when a normal image is displayed on the image display portion 110, by seeing the light output from the image display portion 110 as it is, the viewer can perceive the image as the normal image.

Note that, in FIG. 1, the display device 100 is portrayed as a television receiver, but the present invention is naturally not limited to this example of the form of the display device 100. The display device 100 according to the present invention may be, for example, a monitor that is used when connected to an electronic appliance such as a personal computer or the like, or it may be a mobile game console, a mobile telephone, or a portable music playback device and so on.

The outer appearance of the display device 100 is described above. Next, the functional structure of the display device 100 will be explained.

(Functional Structure of Display Deice)

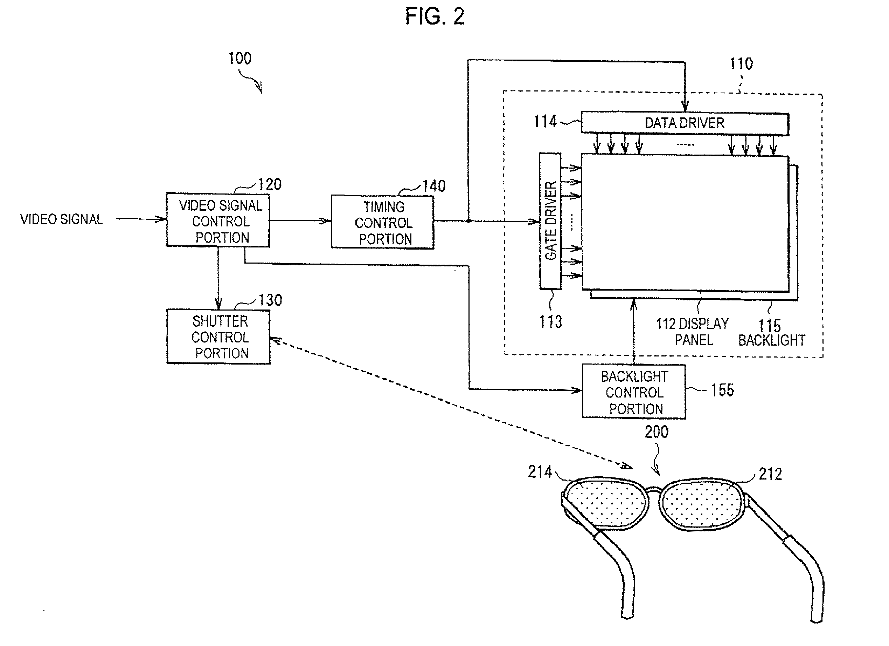

FIG. 2 is showing the functional structure of the display device 100. Hereinafter, the functional structure of the display device 100 will be explained with reference to FIG. 2.

As shown in FIG. 2, the display device 100 includes the image display portion 110, a video signal control portion 120, a shutter control portion 130, a timing control portion 140, and a backlight control portion 155.

The image display portion 110 displays images in the manner described above, and when a signal is applied from an external source, display of images is performed in accordance with the applied signal. The image display portion 110 includes a display panel 112, a gate driver 113, a data driver 114 and a backlight 115.

The display panel 112 displays images in accordance with the signal applied from an external source. The display panel 112 displays images by sequentially scanning a plurality of scanning lines. Liquid crystal molecules having a predetermined orientation are filled in a space between transparent plates, made of glass or the like, of the display panel 112. A drive system of the display panel 112 may be a twisted nematic (TN) system, a vertical alignment (VA) system, or an in-place-switching (IPS) system. In the following explanation, the drive system of the display panel 112 is the VA system, unless otherwise specified, but it goes without saying that the present invention is not limited to this example. Note that the display panel 112 according to the present embodiment is a display panel that can rewrite the screen at a high-speed frame rate (120 Hz and 240 Hz, for example). In the present embodiment, an image for the right eye and an image for the left eye are displayed alternately on the display panel 112 at a predetermined timing, thereby causing the viewer to perceive a stereoscopic image.

The gate driver 113 is a driver that drives a gate bus line (not shown in the figures) of the display panel 112. A signal is transmitted from the timing control portion 140 to the gate driver 113, and the gate driver 113 outputs a signal to the gate bus line in accordance with the signal transmitted from the timing control portion 140.

The data driver 114 is a driver that generates a signal that is applied to a data line (not shown in the figures) of the display panel 112. A signal is transmitted from the timing control portion 140 to the data driver 114. The data driver 114 generates a signal to be applied to the data line, in accordance with the signal transmitted from the timing control portion 140, and outputs the generated signal.

The backlight 115 is provided on the furthermost side of the image display portion 110 as seen from the side of the viewer. When an image is displayed on the image display portion 110, white light that is not polarized (unpolarized light) is output from the backlight 115 to the display panel 112 positioned on the side of the viewer. The backlight 115 may use a light-emitting diode, for example, or may use a cold cathode tube. Note that the backlight 115 shown in FIG. 2 is a surface light source, but the present invention is not limited to this form of light source. For example, the light source may be arranged around the peripheral edges of the display panel 112, and may output light to the display panel 112 by diffusing the light from the light source using a diffuser panel etc. Alternatively, for example, a point light source and a condenser lens may be used in combination in place of the surface light source. Note that as the display device 100, the present embodiment exemplifies a liquid crystal display device that displays video using liquid crystal, however, the present invention is not limited to this example. As a display device, any type of device that displays video using CRT, LED liquid crystal, plasmas, organic EL, or the like may be used, and a device that displays video on a screen by projecting the video on the screen may be used.

When the video signal control portion 120 receives a video signal from an external source, the video signal control portion 120 performs various types of signal processing on the received video signal such that it is suitable for three-dimensional image display on the image display portion 110 and outputs the processed signal. The video signal on which signal processing has been performed by the video signal control portion 120 is transmitted to the timing control portion 140. Further, when the video signal control portion 120 performs signal processing, it transmits a predetermined signal to the shutter control portion 130 in accordance with the signal processing. The signal processing by the video signal control portion 120 is, for example, as described below.

When a video signal (a video signal for the right eye) to display an image for the right eye on the image display portion 110 and a video signal (a video signal for the left eye) to display an image for the left eye on the image display portion 110 are transmitted to the video signal control portion 120, the video signal control portion 120 generates, from the two video signals, a video signal for three dimensional images. In the present embodiment, from the input video signal for the right eye and video signal for the left eye, the video signal control portion 120 generates video signals to cause images to be displayed in a time division manner on the display panel 112 in the following order: image for the right eye -> image for the left eye -> image for the right eye -> image for the left eye, and so on. In some cases, the image for the left eye and the image for the right eye are each displayed by repeatedly displaying a plurality of frames, and in such a case, the video signal control portion 120 generates video signals to cause images to be displayed, for example, in the following order: image for the right eye -> image for the right eye -> image for the left eye -> image for the left eye -> image for the right eye -> image for the right eye and so on.

The shutter control portion 130 receives transmission of a predetermined signal that is generated based on signal processing by the video signal control portion 120. Based on the received predetermined signal, the shutter control portion 130 generates a shutter control signal that controls a shutter operation of the shutter glasses 200. Based on the shutter control signal that is generated by the shutter control portion 130 and emitted by radio based on IEEE 802.15.4 for example, the shutter glasses 200 perform opening and closing operations of the right eye image transmission portion 212 and the left eye image transmission portion 214. The backlight control portion 155 receives transmission of a predetermined signal that is generated based on the signal processing by the video signal control portion 120. Based on the received predetermined signal, the backlight control portion 155 generates a backlight control signal that controls an illumination operation of the backlight.

Based on a signal transmitted from the video signal control portion 120, the timing control portion 140 generates pulse signals that are used in operation of the gate driver 113 and the data driver 114. By generating the pulse signals in the timing control portion 140, and by the gate driver 113 and the data driver 114 receiving the pulse signals generated by the timing control portion 140, images are displayed on the display panel 112 in accordance with signals transmitted from the video signal control portion 120.

This completes the description of the functional structure of the display device 100 with reference to FIG. 2. Next, the structures of the shutter control portion 130 included in the display device 100 and the shutter control portion 210 included in the shutter glasses 200 will be described.

(Functional Structures of Shutter Control Portions)

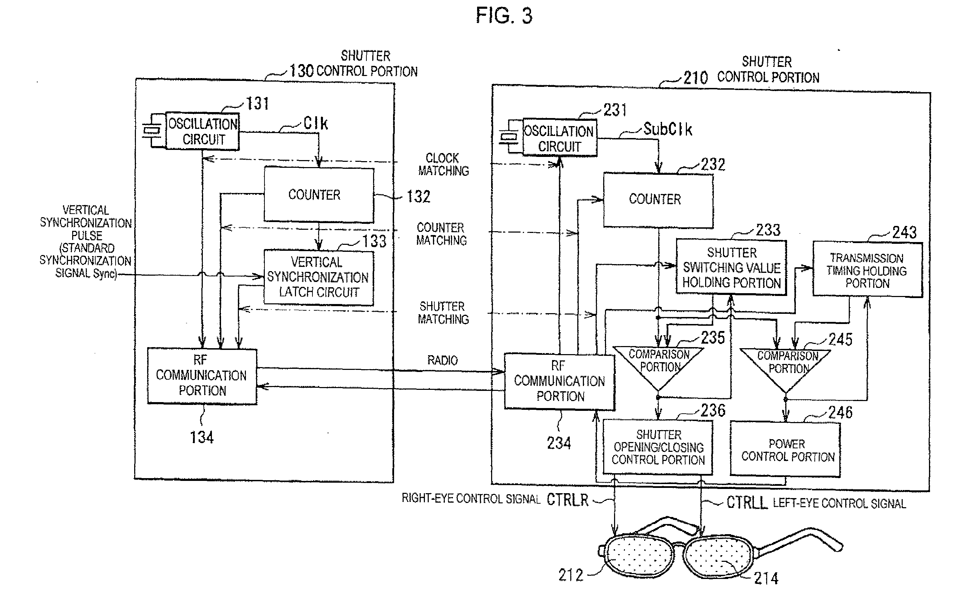

FIG. 3 shows example structures of the shutter control portion 130 included in the display device 100 and the shutter control portion 210 included in the shutter glasses 200. The structures of the shutter control portions 130, 210 are described below with reference to FIG. 3.

As shown in FIG. 3, the shutter control portion 130 includes an oscillation circuit 131, a counter 132, a vertical synchronization latch circuit 133, and an RF communication portion 134. The shutter control portion 210 includes an oscillation circuit 231, a counter 232, a shutter switching value holding portion 233, an RF communication portion 234, a comparison portion 235, a shutter opening/closing control portion 236, a transmission timing holding portion 243, a comparison portion 245, and a power control portion 246.

The oscillation circuit 131 is a circuit that is equipped with a crystal oscillator and oscillates at a specified frequency, and supplies a generated clock to the counter 132 as a standard clock Clk. The counter 132 is a counter that increments a value based on the standard clock Clk generated by the oscillation circuit 131 and outputs as a standard count value Cnt. The counter 132 is a counter used to indicate the opening/closing timing of the right eye image transmission portion 212 and the left eye image transmission portion 214 of the shutter glasses 200, with control being carried out between the display device 100 and the shutter glasses 200 so that the value of the counter 132 is the same as the value of the counter 232. Also, as described later, the counter 132 is also used to inform the shutter glasses 200 of transmission timing when the display device 100 transmits information to the shutter glasses 200.

' The vertical synchronization latch circuit 133 is a circuit that holds the value of the counter 132 at timing of rises and falls of vertical synchronization pulses (a standard synchronization signal Sync) supplied from outside the shutter control portion 130. The value of the counter 132 held by the vertical synchronization latch circuit 133 is transmitted by radio from the RF communication portion 134 to the shutter glasses 200 and is stored inside the shutter control portion 210. The RF communication portion 134 carries out radio communication based on IEEE 802.15.4 with the RF communication portion 234, of the shutter control portion 210.

The shutter control portion 210 transmits a synchronization request for a clock frequency to the display device 100, receives a packet transmitted by radio from the display device 100 and synchronizes the clock frequency, and controls the opening/closing timing of the liquid crystal shutters. The RF communication portion 234 carries out radio communication based on IEEE 802.15.4 with the RF communication portion 134 of the shutter control portion 130. The oscillation circuit 231 is a circuit that is equipped with a crystal oscillator and oscillates at a specified frequency, and supplies a generated clock to the counter 232 as a subclock SubClk. The counter 232 is a counter that increments a value based on the subclock SubClk generated by the oscillation circuit 231 and outputs as a subcount value Csub. The counter 232 is a counter used for switching opening and closing of the right eye image transmission portion 212 and the left eye image transmission portion 214 of the shutter glasses 200, and is provided so that the value of the counter 232 and the value held by the shutter switching value holding portion 233 are compared by the comparison portion 235, and when both match, control is carried out by the shutter opening/closing control portion 236 so that the right eye image transmission portion 212 and/or the left eye image transmission portion 214 are opened and closed. The counter 232 is also used so that the value of the counter 232 and the value held by the transmission timing holding portion 243 are compared by the comparison portion 245 and when both match, control is carried out so that the RF communication portion 234 is made able to receive. Note that the bit length of the counter 232 is the same as the bit length of the counter 132.

The shutter switching value holding portion 233 holds information on the value of the counter that indicates the shutter opening/closing timing and is transmitted by radio from the display device 100via the RF communication portion 134. If the value of the counter 232 that is incremented by the clock generated by the oscillation circuit 231 matches the value stored by the shutter switching value holding portion 233, the shutter opening/closing control portion 236 carries out control so that the right eye image transmission portion 212 and/or the left eye image transmission portion 214 are caused to open and/or close.

The comparison portion 235 compares the value of the counter 232 that is incremented by the clock generated by the oscillation circuit 231 and the value stored in the shutter switching value holding portion 233. Both are compared and if there is a match, the comparison portion 235 transmits an opening/closing instruction (right eye control signal CTRLR and left eye control signal CTRLL) to the shutter opening/closing control portion 236 to cause the right eye image transmission portion 212 and/or the left eye image transmission portion 214 to open and close and instructs the shutter switching value holding portion 233 to increment the value stored in the shutter switching value holding portion 233 in order to set the next opening/closing timing. The value of the increment is transmitted in advance from the display device 100 to the shutter glasses 200 as a switching interval. By transmitting the opening/closing interval and/or opening/closing timing of the liquid crystal shutters from the display device 100 to the shutter glasses 200 in advance as a parameter described later, it becomes possible for the shutter glasses 200 to find the next opening/closing timing by calculation. The shutter switching value holding portion 233 holds the value found by calculation and also holds the value while correcting the timing using the counter value transmitted from the shutter control portion 130 with a specified interval. Notification of the switching timing of the liquid crystal shutters is then given to the comparison portion 235 as the value of the counter held by the shutter switching value holding portion 233.

The shutter opening/closing control portion 236 causes the right eye image transmission portion 212 and/or the left eye image transmission portion 214 to open and close, and causes the right eye image transmission portion 212 and/or the left eye image transmission portion 214 to open and close based on opening/closing instructions (the right eye control signal CTRLR and left eye control signal CTRLL) from the comparison portion 235.

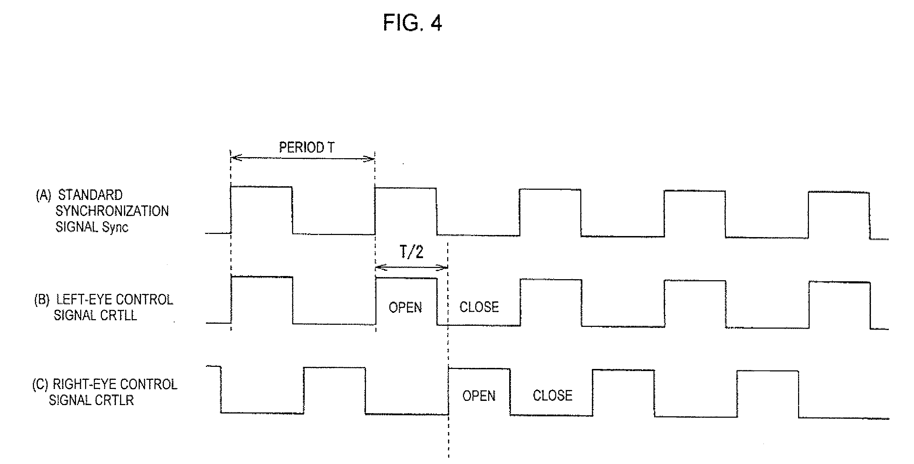

FIG. 4 shows the relationship between the standard synchronization signal Sync, and the right eye control signal CTRLR and left eye control signal CTRLL, with (A) showing the waveform of the standard synchronization signal Sync, (B) showing the waveform of the left eye control signal CTRLL, and (C) showing the waveform of the right eye control signal CTRLR.

The standard synchronization signal Sync has a rectangular waveform as shown in FIG. 4(A). The duty ratio of the standard synchronization signal Sync can be changed. The left eye control signal CTRLL has the same waveform as the standard synchronization signal Sync. That is, the video display system 10 operates so that the timing of rises and falls in the standard synchronization signal Sync in the display device 100 is reproduced in the shutter glasses 200 as the left eye control signal CTRLL. The right eye control signal CTRLR is generated in the shutter opening/closing control portion 236 so as to have a waveform that is one half-cycle behind the left eye control signal CTRLL. The left eye control signal CTRLL and the right eye control signal CTRLR indicate the respective states of the left eye image transmission portion 214 and the right eye image transmission portion 212. That is, a high level for the left eye control signal CTRLL and the right eye control signal CTRLR indicates a transmission state (open state), and an example level indicates a blocking state (closed state). The duty ratio of the standard synchronization signal Sync described above corresponds to the ratio (opening/closing duty ratio) between the transmission state and blocking state of the respective transmission portions of the left eye image transmission portion 214 and the right eye image transmission portion 212.

The transmission timing holding portion 243 holds information on a value of the counter (a "transmission-side count value Ctr", described later) showing transmission timing at the display device 100 that is transmitted by radio from the display device 100 via the RF communication portion 134.

The comparison portion 245 compares the value of the counter 232 and the value stored by the transmission timing holding portion 243. Both are compared and if there is a match, the comparison portion 245 instructs the power control portion 246 to make the RF communication portion 234 able to receive and instructs the transmission timing holding portion 243 to increment the value stored by the transmission timing holding portion 243 in order to set the next transmission timing. The value of the increment is transmitted in advance from the display device 100 to the shutter glasses 200 as the transmission timing interval. By transmitting the transmission timing interval and/or transmission timing (the transmission-side count value Ctr) from the display device 100 to the shutter glasses 200 as a parameter described later, it is possible for the shutter glasses 200 to find the next transmission timing by calculation. The transmission timing holding portion 243 holds the value found by calculation and also holds the value while correcting the timing using the count value (transmission-side count value Ctr) transmitted from the shutter control portion 130 at specified intervals. Notification of the transmission timing is then given to the comparison portion 245 as the value of the counter held by the transmission timing holding portion 243.

The power control portion 246 sets the state of the RF communication portion 234 at a reception-possible state and at a rest state with low power consumption based on instructions from the comparison portion 245. That is, the power control portion 246 sets a reception timeslot based on an instruction from the comparison portion 245 and carries out control to set the RF communication portion 234 in the reception-possible state in accordance with timing at which the display device 100 transmits. Note that when setting the RF communication portion 234 in the rest state, the power control portion 246 may place other circuits (aside from the oscillation circuit 231, the counter 232, and the like that need to operate constantly) that do not obstruct the operation of the shutter glasses 200 in a rest state.

By constructing the shutter control portions 130, 210 in this way, there is no need to transmit opening/closing instructions for the right eye image transmission portion 212 and/or the left eye image transmission portion 214 by radio at extremely short intervals from the display device 100 to the shutter glasses 200. That is even if the display device 100 does not indicate opening/closing operations every time the shutter glasses 200 perform an opening/closing operation of the shutters, it is possible for the shutter glasses 200 to carry out opening/closing control of the right eye image transmission portion 212 and/or the left eye image transmission portion 214 by comparing the value of the free-running counter 232 inside the shutter glasses 200 and the value held by the shutter switching value holding portion 233. That is, the display device 100 is capable of wirelessly transmitting opening/closing instructions to the shutter glasses 200 at longer intervals than the opening/closing intervals of the shutters.

Also, in the shutter glasses 200, it is possible to set a reception timeslot in accordance with the transmission timing from the display device 100 and set the RF communication portion 234 in the reception-possible state. By doing so, it is possible to reduce the power consumption of the shutter glasses 200.

This completes the description of the structures of the shutter control portions 130, 210 with reference to FIG. 3. Note that in order to cause the right eye image transmission portion 212 and the left eye image transmission portion 214 of the shutter glasses 200 to open and close based on the value of the counter transmitted from the display device 100 in this way, it is necessary for the clock frequencies of the shutter control portions 130, 210 to match. Accordingly, the shutter glasses 200 carry out a process to make the clock frequencies of the shutter control portions 130, 210 match before carrying out opening/closing operations of the right eye image transmission portion 212 and/or the left eye image transmission portion 214. The structure for carrying out the process to make the clock frequencies of the shutter control portions 130, 210 match will now be described here.

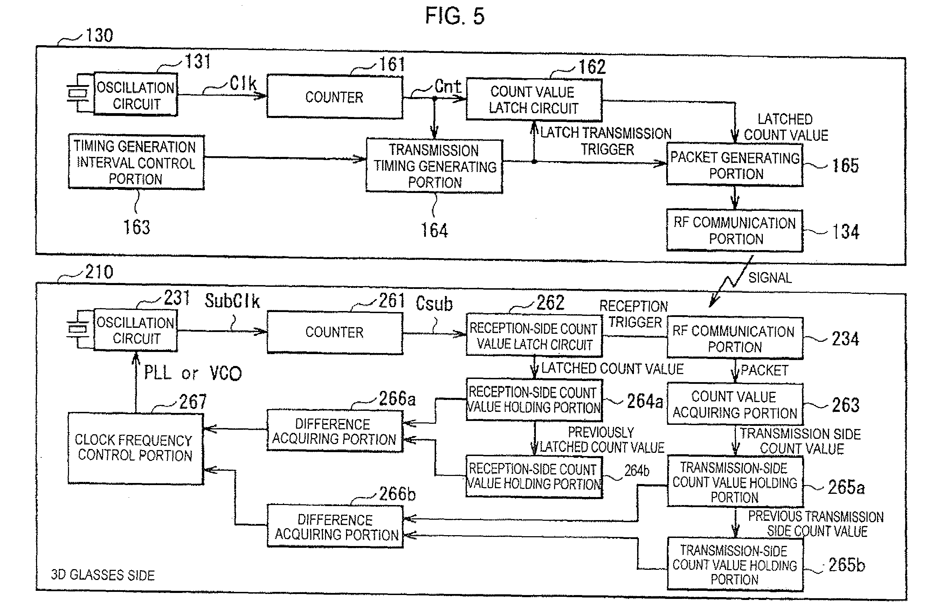

FIG. 5 shows one example structure of the shutter control portions 130, 210. In FIG. 5, the structure for carrying out the process to make the clock frequencies of the shutter control portions 130, 210 match is shown. The structures of the shutter control portions 130,210 are described below with reference to FIG. 5.

As shown in FIG. 5, the shutter control portion 130 includes the oscillation circuit 131 that is equipped with a crystal oscillator, the RF communication portion 134, a counter 161, a count value latch circuit 162, a timing generation interval control portion 163, a transmission timing generating portion 164, and a packet generating portion 165. Also, the shutter control portion 210 includes the oscillation circuit 231, the RF communication portion 234, a counter 261, a reception-side count value latch circuit 262, a count value acquiring portion 263, reception-side count value holding portions 264a, 264b, transmission-side count value holding portions 265a, 265b, difference acquiring portions 266a, 266b, and a clock frequency control portion 267.

The counter 161 is a counter for matching the clock frequencies of the shutter control portions 130, 210, increments a value based on the standard clock Clk generated by the oscillation circuit 131, and outputs as a standard count value Cnt. The count value latch circuit 162 latches the value of the counter 161 as the transmission-side count value Ctr, with the timing of such latching being the timing at which a latch transmission trigger is received from the transmission timing generating portion 164.

The timing generation interval control portion 163 controls the intervals between packet transmission timing from the RF communication portion 134. The timing generation interval control portion 163 notifies the transmission timing generating portion 164 of the transmission timing of a packet at intervals of several hundred milliseconds, for example. In accordance with a synchronization request for the clock frequencies from the shutter glasses 200, the timing generation interval control portion 163 starts to notify the transmission timing generating portion 164.

The transmission timing generating portion 164 notifies the packet generating portion 165 of the transmission timing of a packet. The transmission timing generating portion 164 that has received notification from the timing generation interval control portion 163 transmits the latch transmission trigger to the count value latch circuit 162 and also instructs the packet generating portion 165 to generate a packet including information on the count value (transmission-side count value Ctr) latched by the count value latch circuit 162.

The packet generating portion 165 generates a packet including information on the count value (transmission-side count value Ctr) latched by the count value latch circuit 162. The packet generated by the packet generating portion 165 is transmitted by radio from the RF communication portion 134.

According to the structure described above, the display device 100 generates and transmits a packet including information on the count value latched by the count value latch circuit 162 at timing indicated by the timing generation interval control portion 163. That is, the count value (transmission-side count value Ctr) latched by the count value latch circuit 162 functions as the transmission time at the display device 100 when the packet is transmitted by the display device 100.

The counter 261 is a counter for matching the clock frequencies of the shutter control portions 130, 210, increments a value based on the subclock SubClk generated by the oscillation circuit 231, and outputs as the subcount value Csub. The reception-side count value latch circuit 262 is a circuit that latches the value of the counter 261, and latches the value of the counter 261 at the timing at which the RF communication portion 234 receives the packet including information on the count value (the transmission-side count value Ctr) latched by the count value latch circuit 162. That is, the value (reception-side count value Crec) of the counter 261 latched by the reception-side count value latch circuit 262 functions as the reception time at the shutter glasses 200 when the packet is received by the shutter glasses 200. The value of the counter 261 latched by the reception-side count value latch circuit 262 is sent to the reception-side count value holding portion 264a. The value that was hitherto stored by the reception-side count value holding portion 264a is then sent to the reception-side count value holding portion 264b at the timing at which the value of the counter 261 latched by the reception-side count value latch circuit 262 is sent to the reception-side count value holding portion 264a.

The count value acquiring portion 263 acquires information on the count value latched by the count value latch circuit 162 that is included in the packet received by the RF communication portion 234. The information on the count value acquired by the count value acquiring portion 263 is sent to the transmission-side count value holding portion 265a.

The reception-side count value holding portions 264a, 264b hold the value of the counter 261 latched by the reception-side count value latch circuit 262. The reception-side count value holding portion 264a holds the value of the counter 261 latched by the reception-side count value latch circuit 262 at the timing at which the packet including information on the count value latched by the count value latch circuit 162 transmitted from the RF communication portion 134 was received. Also, the reception-side count value holding portion 264b holds the value of the counter 261 latched by the reception-side count value latch circuit 262 at the timing at which the packet including information on the count value latched by the count value latch circuit 162 transmitted from the RF communication portion 134 the previous time was received. '

The transmission-side count value holding portions 265a, 265b hold the count value latched by the count value latch circuit 162 that has been acquired by the count value acquiring portion 263. The transmission-side count value holding portion 265a holds the count value (transmission-side count value Ctr) latched by the count value latch circuit 162 included in the packet transmitted from the RF communication portion 134. Also, the transmission-side count value holding portion 265b holds the count value latched by the count value latch circuit 162 included in the packet transmitted from the RF communication portion 134 the previous time.

The difference acquiring portion 266a acquires the difference between the values held by the reception-side count value holding portions 264a, 264b. In the same way, the difference acquiring portion 266b acquires the difference between the values held by the transmission-side count value holding portions 265a, 265b. By comparing the differences acquired by the difference acquiring portions 266a, 266b using the clock frequency control portion 267, it is possible for the clock frequency control portion 267 to grasp any difference between the clock frequency of the standard clock Clk generated by the oscillation circuit 131 and the clock frequency of the subclock SubClk generated by the oscillation circuit 231.

The clock frequency control portion 267 compares the differences acquired by the difference acquiring portions 266a, 266b, grasps any difference in the clock frequency between the transmission side and the reception side, and controls the clock frequency of the oscillation circuit 231. That is, if, for example, the difference for the counter 161 on the transmission side is larger than the difference for the counter 261 on the reception side, the clock frequency of the standard clock Clk generated by the oscillation circuit 131 is higher than the clock frequency of the subclock SubClk generated by the oscillation circuit 231, and accordingly the clock frequency control portion 267 controls the clock frequency of the oscillation circuit 231 in an increasing direction so as to match the clock frequency of the oscillation circuit 131.

By constructing the shutter control portions 130, 210 in this way, it is possible to match the clock frequency of the oscillation circuit 231 to the clock frequency of the oscillation circuit 131. Note that the shutter control portion 210 may carry out the control process over the clock frequency of the oscillation circuit 231 using the clock frequency control portion 267 a number of times consecutively. Note that the packet (clock frequency synchronization packet) for synchronizing the clock frequencies is transmitted regularly from the shutter control portion 130 even after the clock frequency of the oscillation circuit 231 has been matched to the clock frequency of the oscillation circuit 131. In the shutter glasses 200, it is possible to receive the clock frequency synchronization packet regularly transmitted from the shutter control portion 130 and carry out the synchronization process for the clock frequency to continuously synchronize the clock frequencies. When doing so, the transmission interval of the clock frequency synchronization packet from the shutter control portion 130 may be longer than the transmission interval when the clock frequency is synchronized the first time. By setting the transmission interval of the clock frequency synchronization packet from the shutter control portion 130 longer, the power required for transmitting and receiving packets is suppressed.

This completes the description of the structure for carrying out the process for matching the clock frequencies of the shutter control portions 130, 210 with reference to FIG. 5.

Here, the display device 100 corresponds to a specific example of a "video display device" for the present invention. The image display portion 110 corresponds to a specific example of a "display portion" for the present invention. The counters 132, 161 correspond to specific examples of "clock counters" in a video display device according to the present invention. The transmission-side count value Ctr corresponds to a specific example of a "transmission time count value" for the present invention. The RF communication portion 134 corresponds to a specific example of a "transmission portion" for the present invention.

The right eye image transmission portion 212 and the left eye image transmission portion 214 correspond to specific examples of "shutters" for the present invention. The counters 232, 261 correspond to specific examples of "clock counters" in shutter glasses according to the present invention. The reception-side count value Crec corresponds to a specific example of a "reception time count value" for the present invention. The RF communication portion 234, the reception-side count value latch circuit 262, the reception-side count value holding portions 264a, 264b, the count value acquiring portion 263, and the transmission-side count value holding portions 265a, 265b correspond to specific examples of a "reception portion" for the present invention. The power control portion 246 corresponds to a specific example of a "control portion" for the present invention.

Operation and Effects

Next, the operation of the video display system 10 will be described.

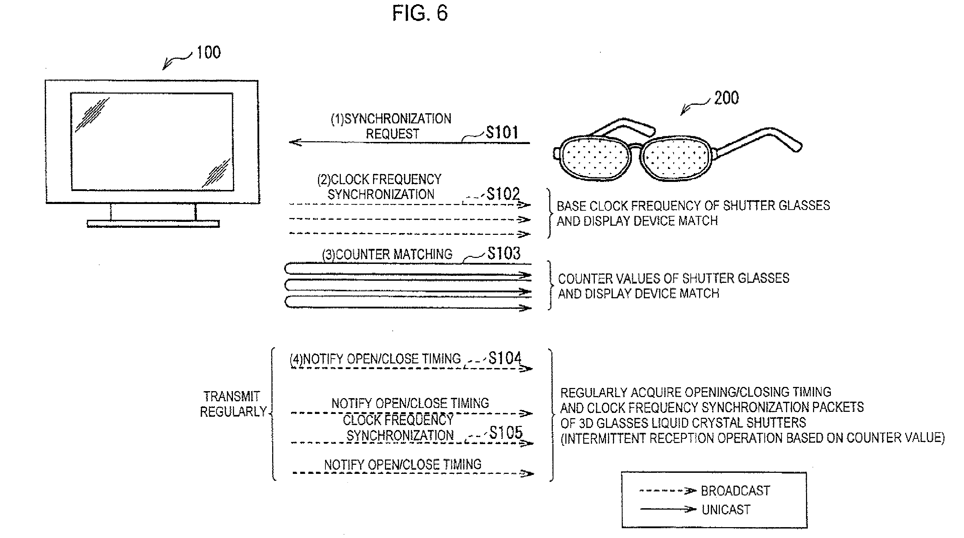

FIG. 6 shows a series of operations carried out by the display device 100 and the shutter glasses 200. The series of operations carried out by the display device 100 and the shutter glasses 200 are described below with reference to FIG. 6. Note that in FIG. 6, for the lines between the display device 100 and the shutter glasses 200, the solid lines show unicast transmission and the broken lines show broadcast transmission, respectively.

To view video that is displayed on the display device 100 according to time division via the shutter glasses 200, first it is necessary to match the clock frequencies of the shutter control portion 130 and the shutter control portion 210. For this reason, the shutter glasses 200 transmit a synchronization request for the clock frequencies by radio to the display device 100 (step S101). A synchronization request packet for the clock frequencies is generated by the shutter control portion 210, for example.

The display device 100 that has received the synchronization request for the clock frequencies by radio from the shutter glasses 200 transmits a packet including the value of the counter 161 for synchronizing the clock frequencies by radio to the shutter glasses 200 (step S102). Note that although the packet including the value of the counter 161 is transmitted from the display device 100 by a broadcast, the details thereof are described later.

Once the clock frequency has been synchronized with the display device 100, the shutter glasses 200 next transmit, by radio to the display device 100, a matching request for the counter value of the counter 161 to indicate the opening/closing timing of the right eye image transmission portion 212 and/or the left eye image transmission portion 214 (step S103). Although such matching process for the count values carried out between the display device 100 and the shutter glasses 200 should preferably take into consideration the time required for radio communication and fluctuations in such time and be repeated several times until the counter values exactly match, the matching process for the counter values may be completed when the values are within a given tolerance.

Once the count values of the display device 100 and the shutter glasses 200 match, the display device 100 then regularly transmits, by radio broadcast to the shutter glasses 200, the value of the counter 132 at timing where the video displayed according to time division on the display device 100 switches as the opening/closing timing of the right eye image transmission portion 212 and/or the left eye image transmission portion 214 (step S104). This notification of the opening/closing timing is transmitted at intervals (for example, intervals of several hundred milliseconds) that are sufficiently longer than the intervals at which the display device 100 switches the video. Also, to correct any difference in clock frequency between the display device 100 and the shutter glasses 200, a packet including the counter value of the counter 161 for synchronizing the clock frequencies is regularly transmitted by radio to the shutter glasses 200 (step S105). It should be obvious that for the present invention, the transmission of a packet including the counter value of the counter 161 does not need to be carried out regularly and may be carried out by broadcast transmission from the display device 100 at timing where the video source changes, for example, at timing when the content has changed (which includes timing of a change from content that displays 3D video to content that displays conventional 2D video, or timing of the opposite change) and/or at timing where the channel has been switched on the display device 100,

By transmitting the opening/closing timing in step S104 described above, it is possible to match the opening/closing timing of the right eye image transmission portion 212 and/or the left eye image transmission portion 214 of the shutter glasses 200 to the switching timing of video displayed by the display device 100. Note that since the switching timing of video displayed by the display device 100 sometimes shifts due to switching of the video source and the like, it is preferable to carry out the transmission of the opening/closing timing of the right eye image transmission portion 212 and/or the left eye image transmission portion 214 from the display device 100 at specified intervals as described above.

Also, together with the transmission of the opening/closing timing in step S104 described above, various parameters relating to the opening/closing timing are also transmitted by radio from the display device 100. The vertical synchronization frequency when video is displayed by the display device 100 is not a single value and changes according to region and/or the device construction. Also, the opening/closing timing of the shutter glasses 200 also changes according to the type of display panel. Accordingly, by transmitting various parameters relating to the opening/closing timing from the display device 100 to the shutter glasses 200, it becomes possible to make the shutter glasses 200 compatible with various types of display device.

The opening/closing pattern of the liquid crystal shutters of the shutter glasses 200 when causing the images displayed on the image display portion 110 to be perceived as stereoscopic images has the right eye image transmission portion 212 and the left eye image transmission portion 214 open alternately and does not open both at the same time. Also, to prevent crosstalk, a period where both liquid crystal shutters are closed should preferably be provided from the closing of one liquid crystal shutter until the opening of the other liquid crystal shutter. However, if the period where both liquid crystal shutters are closed is set too long, the length of time the liquid crystal shutters are open becomes short and the amount of light reaching the eye is reduced, making the video appear dark.

Also, the opening/closing intervals of the liquid crystal shutters of the shutter glasses 200 are decided by the frame interval and the image switching frequency of the display device 100. The frame interval of the display device 100 changes according to the frame frequency of the image source and whether image quality improvement processing, such as processing that improves the number of display frames, is carried out by the display device 100. Also, the period both liquid crystal shutters are closed to prevent crosstalk is affected by the switching frequency of video on the display device 100 and the optimal value changes according to the device type of the display panel (CRT, liquid crystal, LED liquid crystal, plasma, organic EL, or the like) and the scanning method of the display panel.

Accordingly, the optimal value of the opening/closing timing of the liquid crystal shutters of the shutter glasses 200 is decided not according to the shutter glasses 200 but according to the construction and/or video source of the display device 100. Also, aside from sources that cause the user to perceive stereoscopic video, image sources include sources that are perceived as conventional flat images, and when flat images are displayed on the display device 100, it is preferable to stop the opening/closing operations of the liquid crystal shutters of the shutter glasses 200 and set the shutters in a constantly open state to make the video easy to watch.

As described above, by giving notification, as parameters, of the timing at which opening/closing operations of the liquid crystal shutters of the shutter glasses 200 are to be carried out to the shutter glasses 200 from the display device 100, it is possible to facilitate optimization of the opening/closing timing of the liquid crystal shutters of the shutter glasses 200. More specifically, by transmitting the opening/closing interval of the liquid crystal shutters, the video transmission time of the liquid crystal shutters, and the respective offset times until the start of the video transmission time of the left and right liquid crystal shutters as parameters to the shutter glasses 200, the display device 100 is capable of optimizing the opening/closing timing of the liquid crystal shutters of the shutter glasses 200.

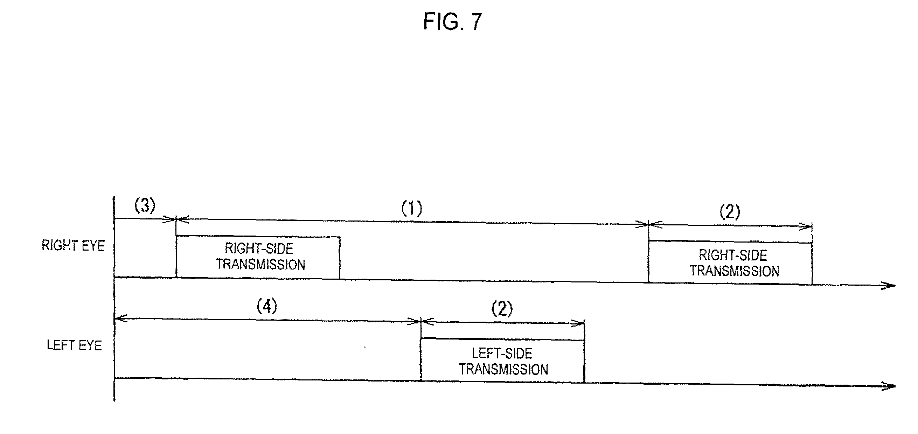

FIG. 7 shows one example of the opening/closing timing of the right eye image transmission portion 212 and the left eye image transmission portion 214. In FIG. 7, (1) shows the opening/closing interval of the liquid crystal shutters and matches the switching interval of the video displayed on the display device 100. (2) shows the video transmission time of the liquid crystal shutters, and is the time for which the right eye image transmission portion 212 or the left eye image transmission portion 214 of the shutter glasses 200 passes light in one interval. As a rule, the video transmission time is the same for the right eye and the left eye and the optimal time for the video transmission time is decided according to the type and/or frame frequency of the display device 100. (3) and (4) are offset times until the respective left and right liquid crystal shutters open from a start point of an opening/closing interval of the liquid crystal shutters.

The parameters (1) to (4) described above transmitted from the display device 100 have the value of the counter 132 (the counter 232) as a standard. When parameters are transferred from the display device 100 to the shutter glasses 200, since the clock frequencies of the display device 100 and the shutter glasses 200 and the values of the counters 132, 232 have been synchronized, it is possible to control the opening/closing timing of the liquid crystal shutters of the shutter glasses 200 from the display device 100 by transferring relative values and absolute values of the counter value as the parameters (1) to (4) described above. '

Note that FIG. 7 shows an example of the opening/closing timing for a case where a user wearing the shutter glasses 200 is caused to perceive stereoscopic video, but in a case where different video is presented to a plurality of users, the right eye image transmission portion 212 and the left eye image transmission portion 214 are simultaneously opened and closed and in a case where flat images are presented, the right eye image transmission portion 212 and the left eye image transmission portion 214 are constantly open. Accordingly, by also transmitting the type of video being displayed from the display device 100 to the shutter glasses 200 as a parameter, it becomes possible for the shutter glasses 200 to control the opening/closing timing of the liquid crystal shutters.

Also, the display device 100 also transmits, by radio to the shutter glasses 200, the timing (the transmission-side count value Ctr) at which information relating to the opening/closing timing is transmitted using the parameters described above. By doing so, the shutter glasses 200 are able to switch a reception operation on and off at such timing and thereby suppress the power consumption.

In this way, by synchronizing the clock frequencies between the display device 100 and the shutter glasses 200 in advance and regularly giving notification of the opening/closing timing of the right eye image transmission portion 212 and/or the left eye image transmission portion 214 from the display device 100, the RF communication portion 234 in the shutter glasses 200 may be caused to operate only at the timing when notification of the opening/closing timing is given, and compared to a case where notification of the opening/closing timing is given from the display device 100 at the same time as the switching timing of video, it is possible to make a large reduction in power consumption of the display device 100 and the shutter glasses 200. By giving notification of information on the opening/closing timing from the display device 100 in advance, even when the shutter glasses 200 have been unable to receive a packet from the display device 100 due to whatever reason, it will still be possible to continue the opening/closing operations of the right eye image transmission portion 212 and the left eye image transmission portion 214 based on the counter that is free running inside the shutter glasses 200.

Here, the types of packet transmitted and received by radio between the display device 100 and the shutter glasses 200 are categorized. The packets transmitted and received by radio between the display device 100 and the shutter glasses 200 include a (1) clock frequency synchronization request packet, a (2) clock frequency synchronization packet, a (3) counter matching packet, a (4) parameter notification packet, a (5) shutter timing notification packet, and a (6) shutter timing and parameter enquiry packet.

The (1) clock frequency synchronization request packet is a packet transmitted from the shutter glasses 200 to the display device 100, and on receiving such clock frequency synchronization request packet, the display device 100 replies by sending the value of the counter 161 used to synchronize the clock frequencies several times to the shutter glasses 200 by way of the (2) clock frequency synchronization packet.

As described above, the (2) clock frequency synchronization packet is a packet used by the display device that has received the (1) clock frequency synchronization request packet to transmit the value of the counter 161 used to synchronize the clock frequencies several times to the shutter glasses 200.

The (3) counter matching packet is a packet wirelessly transmitted and received in both directions between the display device 100 and the shutter glasses 200 and is transmitted from the shutter glasses 200 that have synchronized their clock frequency with the display device 100. The value of the counter 132 is transmitted in reply from the display device 100 and is used at the shutter glasses 200 to match the counter.

The (4) parameter notification packet is a packet for transferring, from the display device 100, various parameters relating to the opening/closing timing of the liquid crystal shutters of the shutter glasses 200 as described above, the transmission timing (the transmission-side count value Ctr) from the display device 100, and the transmission timing interval, and may be transmitted at the same timing as the transmission of the (2) clock frequency synchronization packet.

The (5) shutter timing notification packet is a packet regularly transmitted as a broadcast from the display device 100 to the shutter glasses 200 and is a packet for giving notification of the opening/closing timing of the liquid crystal shutters of the shutter glasses 200 using the value of a counter.

The (6) shutter timing and parameter enquiry packet is a packet that separately requests transfer of the (5) shutter timing notification packet when the shutter glasses 200 could not receive the (5) shutter timing notification packet from the display device 100. Note that the reply from the display device 100 that has received the (6) shutter timing and parameter enquiry packet is send as a unicast.

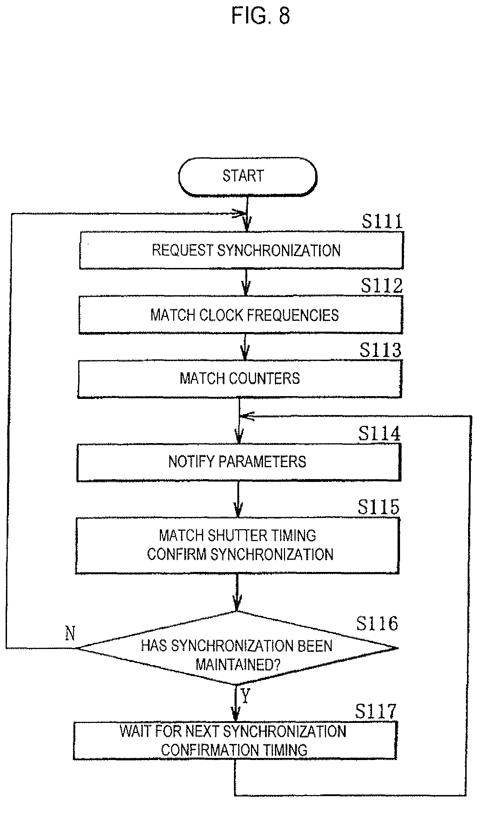

FIG. 8 shows one example operation of the video display system 10 using a flowchart. The series of operations carried out by the display device 100 and the shutter glasses 200 is described below with reference to FIG. 8.

First, the shutter glasses 200 wirelessly transmit a synchronization request for the clock frequencies by radio to the display device 100 (step S111). A synchronization request packet for the clock frequencies is generated by the shutter control portion 210, for example. The timing at which such synchronization request is transmitted from the shutter glasses 200 is the timing at which the power of the shutter glasses 200 is turned on, for example. The display device 100 that has received the synchronization request for the clock frequencies by radio from the shutter glasses 200 transmits a packet including the counter value of the counter 161 for synchronizing the clock frequencies by radio to the shutter glasses 200.

The shutter glasses 200 that have received the packet including the counter value of the counter 161 transmitted by radio from the display device 100 carry out a process that matches the clock frequencies of the display device 100 and the shutter glasses 200 (step S112). Although the process that matches the clock frequencies of the display device 100 and the shutter glasses 200 is carried out by a construction such as that shown in FIG. 3, for the present invention, the construction that carries out the process that matches the clock frequencies of the display device 100 and the shutter glasses 200 is not limited to this example.

When the clock frequencies of the display device 100 and the shutter glasses 200 match, the counter values used to open/close the right eye image transmission portion 212 and/or the left eye image transmission portion 214 are then matched between the display device 100 and the shutter glasses 200 (step S113). This is carried out by the shutter glasses 200 transmitting a matching request for the counter values for indicating the opening/closing timing of the right eye image transmission portion 212 and/or the left eye image transmission portion 214 by radio to the display device 100 and the display device 100 transmitting information on the counter value by radio to the shutter glasses 200 in response to the matching request for the counter values.

Once the counter values used to open and close the right eye image transmission portion 212 and/or the left eye image transmission portion 214 have been matched between the display device 100 and the shutter glasses 200, next the display device 100 notifies the shutter glasses 200 of parameters such as the switching interval and open time of the right eye image transmission portion 212 and/or the left eye image transmission portion 214 (step S214) and notifies the shutter glasses 200 of the opening/closing timing based on the counter value used to open and close the right eye image transmission portion 212 and the left eye image transmission portion 214 (step S115). Note that such parameters may be transmitted from the display device 100 to the shutter glasses 200 at the point in time where the clock frequencies of the display device 100 and the shutter glasses 200 match. When giving notification of the opening/closing timing, the display device 100 notifies the shutter glasses 200 of the present counter value and the shutter glasses 200 compare the received counter value with their own counter value and confirm whether synchronization has not been lost (step S 116).

If, as a result of the judgment in step S116 described above, synchronization has been maintained between the display device 100 and the shutter glasses 200, the shutter glasses 200 enter a state where the next synchronization confirmation timing is awaited (step S117). Meanwhile, if, as a result of the judgment in step S116 described above, synchronization has been lost between the display device 100 and the shutter glasses 200, there is a return to step S111 described above and the shutter glasses 200 wirelessly transmits a synchronization request for the clock frequencies to the display device 100.

If the clock frequencies have been completely matched between the transmission side (the display device 100) and the reception side (the shutter glasses 200), if the opening/closing timing is first transferred from the display device 100 to the shutter glasses 200, the counters will advance according to the respective clocks on the transmission side and the reception side, and if it is possible to carry out the opening/closing operations of the liquid crystal shutters based on the values of such counters, it will not be necessary for the display device 100 to regularly transmit the opening/closing timing as described above as a radio broadcast.

However, in a case where the switching timing of the video displayed by the display device 100 has changed due to the channel being switched, the content being reproduced being switched, or the like, it will be necessary to also change the opening/closing timing of the shutters of the shutter glasses 200. A change in the switching timing caused by such reasons cannot be predicted by the shutter glasses 200. Therefore, the display device 100 needs to inform the shutter glasses 200 of the opening/closing timing. However, if the shutter glasses 200 were constantly in a reception state, power would constantly be consumed for such reception and it would not be possible to extend the battery driven time of the shutter glasses 200 that have a premise of being battery driven.

For this reason, after synchronizing the clock frequencies, synchronizing the counter values, and first receiving the parameters relating to switching and/or the switching timing from the display device 100, the shutter glasses 200 set reception timeslots and intermittently carry out a reception operation. By doing so, it is possible for the shutter glasses 200 to greatly reduce the power during reception and to extend the battery driven time of the shutter glasses 200.

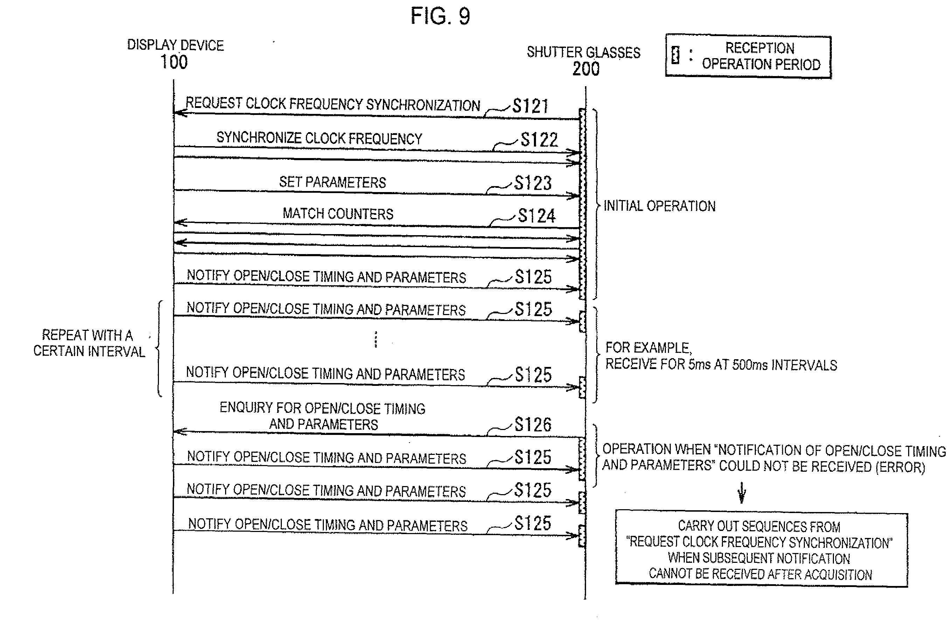

FIG. 9 shows one example of a communication operation in the video display system 10 by way of a sequence chart. FIG. 9 shows a series of operations carried out by the display device 100 and the shutter glasses 200 and also the reception operation periods of the RF communication portion 234 in the shutter glasses 200. The series of operations carried out by the display device 100 and the shutter glasses 200 is described below with reference to FIG. 9.

First, the shutter glasses 200 transmit a synchronization request for the clock frequencies by radio to the display device 100 (step S121). A synchronization request packet for the clock frequencies is generated by the shutter control portion 210, for example. The timing at which such synchronization request is transmitted from the shutter glasses 200 is the timing at which the power of the shutter glasses 200 is turned on, for example. The display device 100 that has received the synchronization request for the clock frequencies by radio from the shutter glasses 200 transmits a packet including the value of the counter for synchronizing the clock frequencies by radio to the shutter glasses 200. The shutter glasses 200 that have received the packet carry out a process that matches the clock frequencies of the display device 100 and the shutter glasses 200 (step S122).

After the synchronization of the clock frequencies of the display device 100 and the shutter glasses 200 has been completed, the counter values used to open and close the right eye image transmission portion 212 and/or the left eye image transmission portion 214 are matched next between the display device 100 and the shutter glasses 200 (step S124), but before the process that matches such counter values, various parameters relating to opening/closing of the right eye image transmission portion 212 and/or the left eye image transmission portion 214 and various parameters relating to transmission from the display device 100 may be transmitted from the display device 100 to the shutter glasses 200 (step S123).

Once the counter values used to open and close the right eye image transmission portion 212 and/or the left eye image transmission portion 214 have been matched between the display device 100 and the shutter glasses 200, the display device 100 next notifies the shutter glasses 200 of parameters such as the switching interval, the open time, and the like of the right eye image transmission portion 212 and/or the left eye image transmission portion 214 and also notifies the shutter glasses 200 of the opening/closing timing based on the counter value used to open and close the right eye image transmission portion 212 and/or the left eye image transmission portion 214 (step S125). At the same time, the display device 100 transmits the transmission timing interval and the transmission timing (the transmission-side count value Ctr) as parameters. After the first notification, the display device 100 transmits information on the parameters and the opening/closing timing by radio at intervals set in advance.

The shutter glasses 200 then set the time from the wireless transmission of the synchronization request for the clock frequencies in step S121 described above to the first notification from the display device 100 as the reception operation period of the RF communication portion 234 and thereafter cause the RF communication portion 234 to carry out a reception operation for a specified time (a reception timeslot) in accordance with the notification of information on parameters and the opening/closing timing from the display device 100 and to enter a rest state at other times. For example, if the information on the parameters and the opening/closing timing is transmitted by radio from the display device 100 at 500 millisecond intervals, the shutter glasses 200 cause the RF communication portion 234 to carry out a reception operation for 5 milliseconds in accordance with the timing of wireless transmission from the display device 100. The reception timeslots are set by the transmission timing holding portion 243, the comparison portion 245, and the power control portion 246 based on the various parameters relating to transmission supplied from the display device 100. The radio communication system used in the present embodiment is based on IEEE 802.15.4, and according to IEEE 802.15.4, it is possible to operate with the time required to carry out transmission from the rest state or the time required to enter the rest state after reception set at several milliseconds or thereabouts. By doing so, the shutter glasses 200 become capable of greatly reducing the power consumption required by radio communication to around one hundredth compared to when a constant reception state is set. Note that although it should be obvious that the standard used for the radio communication system between the display device 100 and the shutter glasses 200 is not limited to this example, as described above, it is preferable to use a standard where the time required to carry out transmission from the rest state or the time required to enter the rest state after reception is around several milliseconds or less. ,

It should be obvious that to realize such intermittent reception by the shutter glasses 200, it is also necessary to transmit information on the parameters and the opening/closing timing from the display device 100 by radio in accordance with the intermittent reception operation periods of the shutter glasses 200, but this can be realized by synchronizing the clock frequencies in advance between the display device 100 and the shutter glasses 200.

In cases where the shutter glasses 200 have not been able to properly receive the information on the parameters and the opening/closing timing from the display device 100 due to the presence of an obstruction, a loss of synchronization, or the like, the shutter glasses 200 enquire about the information on the parameters and the opening/closing timing to the display device 100 (step S126). This may be an enquiry from the shutter glasses 200 to the display device 100 made immediately when reception could not be carried out properly once or may be an enquiry from the shutter glasses 200 to the display device 100 made when reception could not be carried out properly several times consecutively. The display device 100 that has received the enquiry from the shutter glasses 200 transmits the information on the parameters and the opening/closing timing by radio to the shutter glasses 200.

Note that in a case where it is not possible to receive the information on the parameters and the opening/closing timing from the display device 100 even after an enquiry has been made to the display device 100, the shutter glasses 200 judge that synchronization has been lost, a synchronization request for the clock frequencies is transmitted by radio once again from the shutter glasses 200 to the display device 100, and the series of processes is executed from the start. Here, if there is no reply from the display device 100 even when a synchronization request for the clock frequencies has been transmitted by radio once again from the shutter glasses 200 to the display device 100, it is judged that the power of the display device 100 has been turned off and the shutter glasses 200 are capable by themselves of moving to a rest state where hardly any power is consumed.

Also, when a synchronization request from the shutter glasses 200 is received while information on the parameters and the opening/closing timing is being transmitted by a broadcast by the display device 100, the value of the counter 161 used in the synchronization process for the clock frequencies is transmitted by radio by a unicast to the shutter glasses 200 that transmitted the synchronization request at timing that does not affect other shutter glasses 200.

In this way, by having a signal transmitted from the shutter glasses 200 with a specified interval just before the start of reception and the display device 100 that has received such signal from the shutter glasses 200 give notification of the information on the parameters and the opening/closing timing at the timing of such reception without regular notification being given of the information on the parameters and the opening/closing timing from the display device 100, although the time required for transmission by the shutter glasses 200 and the time required for responding by the display device 100 increase, it is possible to realize the same operation as the operation described above without requiring strict timing management. However, in consideration to a case where a plurality of pairs of shutter glasses 200 are simultaneously used for a single display device 100, since it is necessary for all of the shutter glasses 200 to generate radio waves with a specified interval (for example, 500 milliseconds) and for the display device 100 to respond to all of such radio waves, loss of proper operation can be imagined due not only to mixing of the radio waves but also to conflicts between the transmissions of different shutter glasses 200, delays due to conflict avoidance, and the like. Also, although there is also a method where information on the parameters and the opening/closing timing is continuously transmitted all of the time instead of the display device 100 responding in accordance with the timing at which signals are received from the shutter glasses 200, such method would further increase the amount of radio waves and adversely affect other radio communication that uses the same frequency band.

Accordingly, as in the present embodiment, by synchronizing the clock frequencies between the display device 100 and the shutter glasses 200 and matching the counters of the display device 100 and the shutter glasses 200 in advance and then cyclically transmitting information on the parameters and the opening/closing timing from the display device 100 and executing the reception operation of the shutter glasses 200 in accordance with the transmission timing, there is no increase in the amount of radio waves, no conflict between different shutter glasses 200, and also no effect on other radio communication that uses the same frequency band.

This completes the description of the series of operations carried out by the display device 100 and the shutter glasses 200.

Here, the opening/closing timing of the liquid crystal shutters of the shutter glasses 200 is compared for a case where notification is given using infrared light and a case where notification is given using radio. Shutter glasses are already known where infrared light is provided to the shutter glasses from a display device to send the opening/closing timing of the liquid crystal shutters. However, even if light of a light emitting diode used in an infrared light remote controller is turned on or off to send codes, sensitivity cannot be obtained by a photodiode that can be acquired at low cost and use over a practical distance between a display device and the glasses is not possible.

For example, although a remote controller that uses infrared light has a reached distance of around 10m, instead of simply turning light on and off, a signal is placed on a carrier of around 40kHz by changing the intensity of the light and then the light on the carrier is turned on and off. The reception side is equipped with a circuit that resonates at the frequency of the carrier and by doing so, sensitivity is greatly improved and the reached distance mentioned above is achieved.

However, shutter glasses that use infrared light cannot use such method for the reasons below. Although a transmission speed whereby one code is transmitted every 100 milliseconds is sufficient for the codes of a remote controller, for shutter glasses where video switches at intervals of 10 milliseconds to around 20 milliseconds, the switching interval of the video becomes the switching interval of the shutters, and therefore it is necessary to send a code with a rate of once every 10 milliseconds to around 20 milliseconds. Accordingly, even if codes are placed on a carrier, since the transmission time is short and resonance cannot be sufficiently caused, as a result it is not possible to achieve an improvement in sensitivity as with a remote controller.

Also, when a resonance circuit is used on the reception side, a delay is produced and there is great fluctuation in the delay amount due to the effect of the Q value of the resonance circuit, so that the correct shutter switching timing cannot be transferred from the display device. In addition, the power consumption increases when a resonance circuit is used on the reception side, and for shutter glasses that have a premise of being battery driven, the battery will be drained in a short time. At present, the only method is for the transmission side of infrared light to increase the intensity of the light by placing a plurality of infrared LEDs in a row or to use high-cost LEDs with high emission and for the reception side to use a high-cost photodiode with the highest possible sensitivity.

Meanwhile, when notification of the switching timing of the liquid crystal shutters of the shutter glasses is given using radio, it is possible to extend the reached distance further than infrared light while using low power. It is also possible to send a large amount of information in a short time and to achieve reliable transfer and separation by indicating the other party. In addition, with radio waves, a certain degree of obstacles have no effect, and two-way communication can be carried out easily, thereby improving convenience. By sharing hardware with an RF remote controller or the like, low-cost usage is possible, and there is also the advantage of not interfering with appliances that use infrared light for communication, such as remote controllers that are already widespread.

Note that the radio communication system used in the present embodiment is based on IEEE 802.15.4 and a radio communication system based on IEEE 802.15.4 has the following characteristics compared to other radio communication standards.

(1) It is possible to construct a star network.
(2) In a star network, there is no effective limit on the number of periphery nodes for one center node. Accordingly, it is possible to eliminate any limit on the number of shutter glasses for one display device.
(3) High-speed execution is possible with the time from the rest state to transmission or the time from reception to entry into the rest state at around several milliseconds.
(4) It is possible to reduce the power consumption during the rest state to around several tens of $\mu$W.
(5) Not only unicast communication where the other party is indicated in turns but broadcast transmission where the other party is not specified and reception thereof can be performed.
(6) In IEEE 802.15.4, the number of addresses that can specify individual nodes is $(2^{16}\text{-}2)$ so there is effectively no upper limit. Other wireless communication systems have a two-digit limit at most.

The wireless communication system used in the video display system according to the present embodiment is based on the result of adding a function for synchronizing the clock frequencies of periphery nodes (that is, the shutter glasses 200) to the clock frequency of the center node (that is, the display device 100) to IEEE 802.15.4.

Effects

As described above, in the present embodiment, in a video display system where the opening/closing timing of the liquid crystal shutters of the shutter glasses 200 is transmitted by radio from the display device 100, before notification of the opening/closing timing is given from the display device 100, the shutter glasses 200 transmit a synchronization request for the clock frequency by radio to the display device 100 in order to synchronize the clock frequencies between the display device 100 and the shutter glasses 200.

If the clock frequencies are synchronized between the display device 100 and the shutter glasses 200, the values of the counters whose count values change at such clock frequencies are matched between the display device 100 and the shutter glasses 200 and after that notification of the opening/closing timing of the liquid crystal shutters and various parameters is given from the display device 100 with the values of such counters as a standard and the shutter glasses 200 carry out opening and closing operations of the liquid crystal shutters based on the information received from the display device 100. By doing so, it is possible for the shutter glasses 200 to carry out free-running opening and closing operations of the liquid crystal shutters even when individual timing signals or the like are not transmitted from the display device 100 in accordance with the opening/closing timing of the liquid crystal shutters.

Also, according to the present embodiment, the display device 100 cyclically notifies the shutter glasses 200 of the opening/closing timing of the liquid crystal shutters and/or the various parameters and the shutter glasses 200 sets the RF communication portion 234 in a reception possible state for only specified periods in accordance with the transmission interval of the display device 100 and sets the RF communication portion 234 in a sleep state with hardly any power consumption at other times. By doing so, it is possible to greatly reduce the power consumption of the shutter glasses 200 compared to when the RF communication portion 234 is constantly set in the reception possible state.

Also, in the present embodiment, since two-way radio communication is possible between the display device 100 and the shutter glasses 200, by separately providing the shutters glasses 200 with a means such as a gyroscope for measuring an angle and/or an angular velocity, it is possible via the shutter glasses 200 to display video on the display device 100 in accordance with the viewpoint of the user viewing the video displayed on the display device 100.

In the embodiment described above, although an enquiry into the value of the counter is made from the shutter glasses 200 to the display device 100 immediately after the clock frequency has been synchronized as shown in step S103 in FIG. 6 and the display device 100 that has received such enquiry replies to the shutter glasses 200, the present invention is not limited to this example. For example, at the same timing as transmission of the clock frequency synchronization packet to the shutter glasses 200, the display device 100 may also transmit a packet in which the value of the counter 132 at the time of transmission of the clock frequency synchronization packet is embedded. If the delay time produced until the received counter value is written in the counter 232 (generated for example due to the time required by packet generation and decoding and to transmit and receive a packet and the like) when a packet is received is constant, by writing the counter value into the counter 232 having considered such delay time, the shutter glasses 200 are capable of matching the counter value used to open and close the liquid crystal shutters between the display device 100 and the shutter glasses 200 without making an enquiry from the shutter glasses 200 as described above.

Note that when the clock frequencies are synchronized, to transmit the value of the counter 132 when the clock frequency synchronization packet was transmitted from the display device 100 to the shutter glasses 200, a separate packet may be used as described above or the value may be combined with the clock frequency synchronization packet transmitted from the display device 100. By transmitting the value of the counter 132 from the display device 100 combined with the clock frequency synchronization packet, it is possible to efficiently match the clock frequency and the value of the counter between the display device 100 and the shutter glasses 200.

2. The Second Embodiment

Next, a video display system 20 according to a second embodiment of the present invention will be described. The present embodiment differs to the first embodiment described above in the method used by the shutter glasses to find the timing of transmission from the display device. That is, although the shutter glasses 200 find the timing of transmission from the display device 100 by matching the value (subcount value Csub) of the counter 261 of the shutter glasses 200 to the value (standard count value Cnt) of the counter 161 of the display device 100 in the first embodiment (FIG. 5) described above, instead of this, in the present embodiment, the shutter glasses 200 find the transmission timing based on the relationship between the subcount value Csub and the standard count value Cnt. Although the structure of the video display system 20 is the same as the video display system 10 according to the first embodiment shown in FIG. 1, the shutter control portion of the display device and the shutter control portion of the shutter glasses differ to the first embodiment described above. Note that structural parts that are effectively the same as the video display system 10 according to the first embodiment described above have been assigned the same numerals and description thereof is omitted as appropriate.

Structure

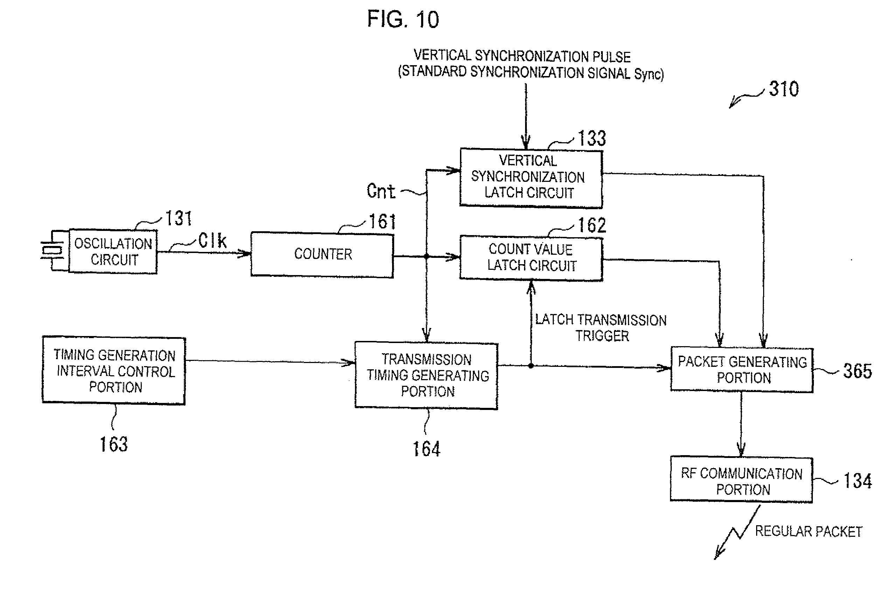

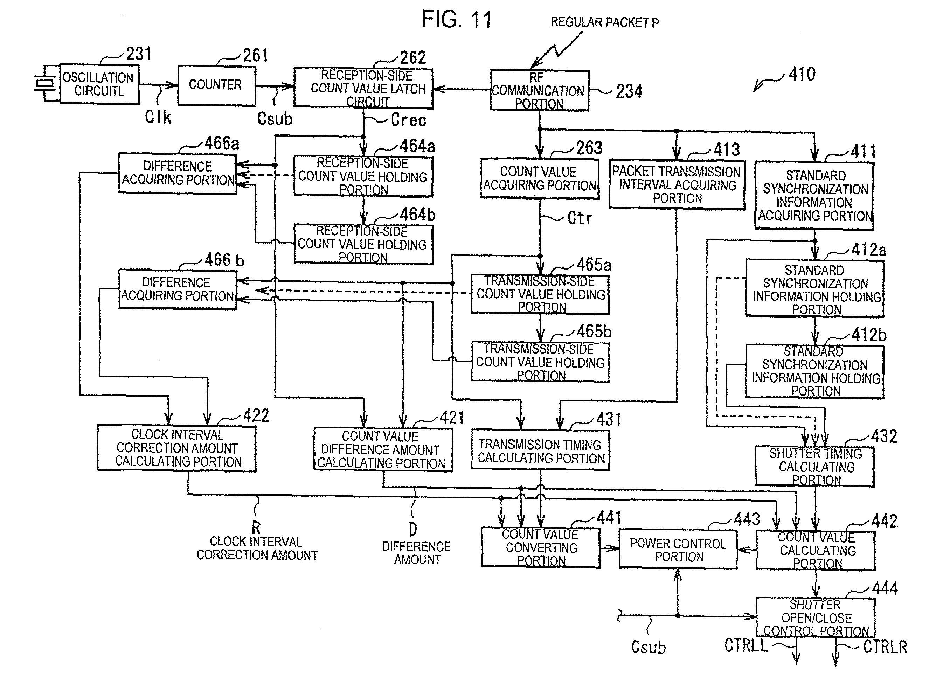

FIG 10 shows one example structure of a shutter control portion 310 of a display device 300 according to the video display system 20. FIG. 11 shows one example structure of a shutter control portion 410 of shutter glasses 400 according to the video display system 20.

The shutter control portion 310 of the display device 300 is equipped with the vertical synchronization latch circuit 133 and a packet generating portion 365. The vertical synchronization latch circuit 133 is the same as the vertical synchronization latch circuit I33 shown in FIG. 3 and is a circuit that holds a value of the counter 161 at timing of rises and falls of the standard synchronization signal Sync supplied from outside the shutter control portion 130. The packet generating portion 365 generates a packet including information on the standard synchronization signal Sync and information for other control in addition to information on the count value (transmission-side count value Ctr) latched by the count value latch circuit 162. As described later, in the video display system 20, the display device 300 regularly transmits a packet (the regular packet P). The regular packet P is described in detail below.

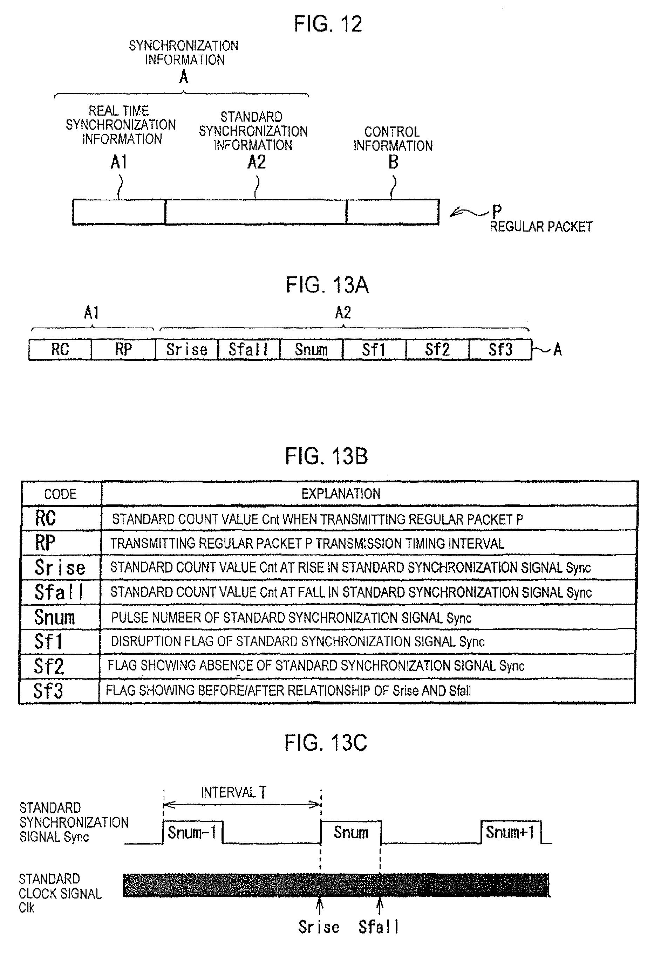

FIG. 12 shows an example structure of the regular packet P transmitted by the display device 300. The regular packet P includes synchronization information A and control information B. The synchronization information A is information required for synchronization between the display device 300 and the shutter glasses 400, and is made up of real time synchronization information A1 and standard synchronization information A2.

FIGS. 13A to 13C show an example structure of the synchronization information A, with FIG. 13A showing the relationship between the synchronization information A and the real time synchronization information A1 and standard synchronization information A2, FIG. 13B showing various parameters of the synchronization information A, and FIG. 13C showing a waveform useful in explaining a number of such parameters. As shown in FIG. 13A, in this example, the real time synchronization information A1 is composed of two count values RC, RP, and the standard synchronization information A2 is composed of a total of six parameters made up of count values Srise, Sfall, a pulse number Snum, and flags Sf1, Sf2, and Sf3.

The count value RC is the standard count value Cnt when the regular packet P is transmitted and is the count value (transmission-side count value Ctr) latched by the count value latch circuit 162. Such RC functions as the transmission time at the display device 300 when the display device 300 transmits the regular packet P. The count value RP is the transmission timing interval of the regular packet P and is a value based on the standard count value Cnt. In other words, RP is a count value according to the standard clock Clk of the transmission timing interval of the regular packet P.

The count value Srise is the standard count value Cnt at a rise in the standard synchronization signal Sync and the count value Sfall is the standard count value Cnt at a fall in the standard synchronization signal Sync. The pulse number Snum is a pulse number of the standard synchronization signal Sync and is incremented by one every time the standard synchronization signal Sync becomes the high level. FIG. 13C shows such count values Srise, Sfall, Snum together with waveforms of the standard synchronization signal Sync and the standard clock Clk.

The flag Sf1 is a disruption flag for the standard synchronization signal Sync. More specifically, Sf1 becomes active when the interval T of the standard synchronization signal Sync is out by at least $\pm 100$ microseconds for example compared to the average value of the cycle T thusfar. As one example, the flag Sf1 may be set at active for a plurality (for example, 3) consecutive regular packets P after disruption of the standard synchronization signal Sync has occurred. In such case, even if reception of the first regular packet P has failed for example, by receiving a following regular packet P, the shutter glasses 400 can reliably know that there has been a disruption in the standard synchronization signal Sync. The flag Sf2 is a flag that becomes active when there is no standard synchronization signal Sync. The flag Sf3 is a flag showing a before/after relationship of the count values Srise, Sfall. More specifically, when for example the count value Sfall is larger than the count value Srise, the flag Sf3 becomes "1" and when the count value Sfall is smaller than the count value Srise, the flag Sf3 becomes "0".

PIG. 14 shows an example structure of the control information B. In this example, the control information B sets an operation mode, right eye image transmission portion control, left eye image transmission portion control, and shutter glasses power control.

As examples, it is possible to set the operation mode so that when the value is "11", a mode is entered where the operation of the shutter glasses 400 is automatically switched to 3D operation or 2D operation according to the presence or absence of the standard synchronization signal Sync, when the value is "01", a mode is entered where a plurality of users separately view 2D video, and when the value is "00", a mode is entered where the shutter glasses are set in a standby state and 2D video is viewed.

As examples, it is possible to set the right eye image transmission portion control and the left eye image transmission portion control so that when the value is '° 11 ", a mode is entered where opening/closing operations are carried out in accordance with the standard synchronization signal Sync, when the value is "10", a mode is entered where the transmission state (open state) is fixed, and when the value is "01", a mode is entered where a non-transmission state (closed state) is processed.

As examples, it is possible to set the shutter glasses power control so that when the value is "11 ", the power of the shutter glasses 400 is set in an ON state, when the value is "10", a standby state is set, and when the value is "00" the power is set in an OFF state.

In the shutter control portion 310 of the display device 300, the packet generating portion 365 generates the regular packet P with the structure described above and the RF communication portion 134 regularly transmits such regular packet P by broadcasting.

The shutter control portion 410 of the shutter glasses 400 includes reception-side count value holding portions 464a, 464b, transmission-side count value holding portions 465a, 465b, difference acquiring portions 466a, 466b, a count value difference amount calculating portion 421, a clock interval correction amount calculating portion 422, a standard synchronization information acquiring portion 411, standard synchronization information holding portions 412a, 412b, a transmission timing calculating portion 431, a shutter timing calculating portion 432, count value converting portions 441, 442, a power control portion 443, and a shutter opening/closing control portion 444.

The reception-side count value holding portions 464a, 464b hold the value of the counter 261 (the reception-side count value Crec) latched by the reception-side count value latch circuit 262 once every specified number of iterations. The reception-side count value Crec functions as the reception time of the regular packet P at the shutter glasses 400. The reception-side count value holding portion 464a reads and stores the reception-side count value Crec supplied from the reception-side count value latch circuit 262 at a rate of once every specified number of iterations. When doing so, at the same time as the reception-side count value holding portion 464a holds new information; the information that was held in the reception-side count value holding portion 464a is transferred to the reception-side count value holding portion 464b and is held in the reception-side count value holding portion 464b. That is, the reception-side count value latch circuit 262 and the reception-side count value holding portions 464a, 464b have a function that holds a maximum of three reception times of the regular packet P.

The transmission-side count value holding portions 465a, 465b store the count value (transmission-side count value Ctr) latched by the count value latch circuit 162 of the display device 300 that has been acquired by the count value acquiring portion 263 once every specified number of iterations. The transmission-side count value Ctr functions as the transmission time of the regular packet P at the display device 300. The transmission-side count value holding portion 465a reads and holds the transmission-side count value Ctr supplied from the count value acquiring portion 263 at a rate of once every specified number of iterations. When doing so, at the same time as the transmission-side count value holding portion 465a holds new information, the information that was held in the transmission-side count value holding portion 465a is transferred to the transmission-side count value holding portion 465b and is held in the transmission-side count value holding portion 465b. That is, the count value acquiring portion 263 and the transmission-side count value holding portions 465a, 465b have a function that holds a maximum of three transmission times of the regular packet P.

The difference acquiring portion 466a finds a difference between two values out of the count values held by the reception-side count value latch circuit 262 and the reception-side count value holding portions 464a, 464b based on such values. As such two values, normally the count values held by the reception-side count value latch circuit 262 and the reception-side count value holding portion 464b are selected, but as described later, in cases where a count value is not held by the reception-side count value holding portion 464b due to the shutter glasses 400 not having received the regular packet P three times, such as immediately after startup of the shutter glasses 400, the count values held by the reception-side count value latch circuit 262 and the reception-side count value holding portion 464a are selected.

The difference acquiring portion 466b finds a difference between two values out of the count values held by the count value acquiring portion 263 and the transmission-side count value holding portions 465a, 465b based on such values. As such two values, in the same way as the difference acquiring portion 466a described above, normally the count values held by the count value acquiring portion 263 and the transmission-side count value holding portion 465b are selected, but in cases where a count value is not held by the transmission-side count value holding portion 465b, the count values held by the count value acquiring portion 263 and the transmission-side count value holding portion 465a are selected.

The count value difference amount calculating portion 421 finds the difference between the standard count value Cnt of the display device 300 and the subcount value Csub of the shutter glasses 400 based on the transmission-side count value Ctr and the reception-side count value Crec and outputs as the difference amount D. More specifically, the count value difference amount calculating portion 421 carries out calculation based on the count values latched in the reception-side count value latch circuit 262 and the count value acquiring portion 263.

The clock interval correction amount calculating portion 422 finds the ratio of the intervals of the standard clock Clk of the display device 300 and the subclock SubClk of the shutter glasses 400 and outputs as the clock interval correction amount R. More specifically, the clock interval correction amount calculating portion 422 carries out calculation based on information supplied from the difference acquiring portions 466a, 466b.

The standard synchronization information acquiring portion 411 acquires the standard synchronization information A2 (FIG. 13A) included in the regular packet P received by the RF communication portion 234. The standard synchronization information holding portions 412a, 412b hold the standard synchronization information A2 acquired by the standard synchronization information acquiring portion 411 once every specified number of iterations. The standard synchronization information holding portion 412a reads and holds the standard synchronization information A2 supplied from the standard synchronization information acquiring portion 411 at a rate of once every specified number of iterations. When doing so, at the same time as the standard synchronization information holding portion 412a holds new information, the information that was held in the standard synchronization information holding portion 412a is transferred to the standard synchronization information holding portion 412b and is held in the standard synchronization information holding portion 412b. That is, the standard synchronization information acquiring portion 411 has a function that holds a maximum of three standard synchronization information A2.

A packet transmission interval acquiring portion 413 acquires the transmission timing interval RP (FIG. 13A, 13B) of the regular packet P included in the regular packet P received by the RF communication portion 234.

Note that although in this example, the required information is separately acquired from the regular packet P received by the RF communication portion 234 using the count value acquiring portion 263, the standard synchronization information acquiring portion 411, and the packet transmission interval acquiring portion 413 and such information is separately stored, instead of being limited to this, as one example it is possible instead to store the regular packet P itself three times for example and to acquire the required information therefrom.

The transmission timing calculating portion 431 finds the timing at which the display device 300 will transmit the next regular packet P based on the transmission-side count value Ctr and the transmission timing interval RP of the regular packet P, with the standard count value Cnt as a standard. That is, the next transmission timing of the regular packet P found by calculation is defined by the time of the display device 300 (the transmission side). More specifically, the transmission timing calculating portion 431 carries out calculation based on information from the count value acquiring portion 263 and the packet transmission interval acquiring portion 413 and supplies the next transmission timing of the regular packet P found by calculation together with the transmission timing interval RP of the regular packet P to the count value converting portion 441.

The count value converting portion 441 converts the standard of the time of the next transmission timing of the regular packet P and of the transmission timing interval RP of the regular packet P supplied from the transmission timing calculating portion 431 from the standard count value Cnt to the subcount value Csub. The next transmission timing of the regular packet P and the transmission timing interval RP of the regular packet P found by such calculation are defined by the time of the shutter glasses 400 (the reception side). More specifically, the count value converting portion 441 carries out the conversion calculation based on the difference amount D supplied from the count value difference amount calculating portion 421 and the clock interval correction amount R supplied from the clock interval correction amount calculating portion 422 and holds the next transmission timing of the regular packet P and the transmission timing interval RP of the regular packet P found by such calculation in a transmission timing register Rtr, described later.

The shutter timing calculating portion 432 finds the next opening/closing timing of the right eye image transmission portion 212 and the left eye image transmission portion 214 of the shutter glasses 400 based on the standard synchronization information A2 with the standard count value Cnt as a standard. That is, the next opening/closing timing found by such calculation is defined by the time of the display device 300 (the transmission side). The shutter timing calculating portion 432 also finds the next opening/closing timing of the shutters and also the shutter opening/closing interval. More specifically, the shutter timing calculating portion 432 carries out calculation based on two values out of the count values held in the standard synchronization information acquiring portion 411 and the standard synchronization information holding portions 412a, 412b. As such two values, in this example, the count values stored in the standard synchronization information acquiring portion 411 and the standard synchronization information holding portion 412b are selected, but this is not a limitation and the count values held in the standard synchronization information acquiring portion 411 and the standard synchronization information holding portion 412a may be selected, for example. The shutter timing calculating portion 432 supplies the next opening/closing timing of the shutters and the shutter opening/closing interval found by such calculation to the count value converting portion 442.

The count value converting portion 442 converts the standard of the time of the next shutter opening/closing timing and of the shutter opening/closing interval supplied from the shutter timing calculating portion 432 from the standard count value Cnt to the subcount value Csub. The next shutter opening/closing timing and the shutter opening/closing interval found by such calculation are defined by the time of the shutter glasses 400 (the reception side). More specifically, the count value converting portion 442 carries out a conversion calculation based on the difference amount D supplied from the count value difference amount calculating portion 421 and the clock interval correction amount R supplied from the clock interval correction amount calculating portion 422 and holds the next shutter opening/closing timing and the shutter opening/closing interval found by such calculation in a shutter timing register Rsh, described later.

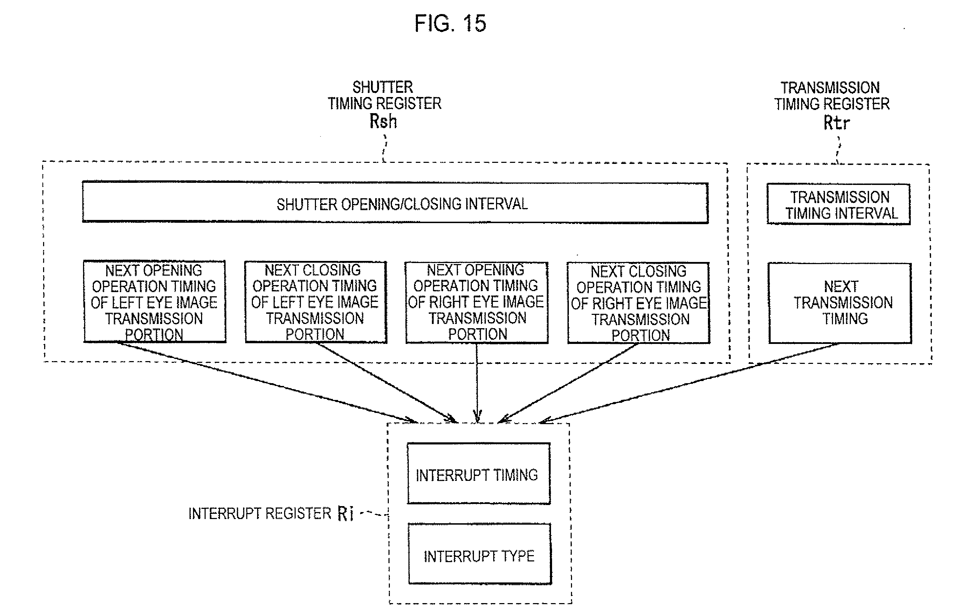

FIG. 15 shows one example structure of the registers of the shutter glasses 400. The shutter glasses 400 are equipped with the transmission timing register Rtr, the shutter timing register Rsh, and an interrupt register Ri. The values of such registers all have the subcount value Csub as a standard and are defined by the time of the shutter glasses 400 (the reception side).

The transmission timing register Rtr stores the next transmission timing of the regular packet P and the transmission timing interval that were found by the count value converting portion 441.

The shutter timing register Rsh stores the next shutter opening/closing timing and the shutter opening/closing interval that were found by the count value converting portion 442. The next shutter opening/closing timing is more specifically composed of a total of four timings made up of the next opening operation timing of the left eye image transmission portion, the next closing operation timing of the left eye image transmission portion, the next opening operation timing of the right eye image transmission portion, and the next closing operation timing of the right eye image transmission portion.

The interrupt register Ri has a function that stores timing information whose timing will arrive first out of the five next timing information described above, that is, the next transmission timing of the regular packet P, the next opening operation timing of the left eye image transmission portion, the next closing operation timing of the left eye image transmission portion, the next opening operation timing of the right eye image transmission portion, and the next closing operation timing of the right eye image transmission portion. More specifically, out of the five next timing information, the timing information whose timing will arrive first is stored in the interrupt register Ri as the interrupt timing. At the same time, the type of timing information held as the interrupt timing, that is, shutter timing or transmission timing, and additionally for the case of shutter timing, information identifying the right eye image transmission portion or the left eye image transmission portion and an opening operation or a closing operation, is stored in the interrupt register Ri as the interrupt type.

The power control portion 443 carries out power control of the shutter glasses 400 based on the information in the interrupt register Ri and the subcount value Csub supplied from the counter 261. More specifically, control is carried out to set the power of the shutter glasses 400 in an on state in accordance with the interrupt timing (FIG. 15) of the interrupt register Ri and after reception of the regular packet P, opening/closing control of the shutters, or the like has been carried out, the shutter glasses 400 are set in a sleep state where hardly any power is consumed. That is, the power control portion 443 has a function that sets reception timeslots for when the regular packet P is received. According to this structure, it is possible to suppress the power consumed by the shutter glasses 400 to a minimum.

Note that the frequency of interrupts relating to opening/closing control of the shutters is comparatively high compared to the frequency relating to reception of the regular packet P and as one example in some cases is 100 times or more higher. For this reason, by newly providing a microcomputer or the like with lower power consumption that is dedicated to carrying out processing relating to opening/closing control of shutters in the shutter control portion 410 and causing the microcomputer to carry out such processing, it is possible to greatly reduce the number of interrupts of the shutter control portion 410 and possible to further reduce the power consumption of the shutter glasses 400 as a whole.

The shutter opening/closing control portion 444 generates the right eye control signal CTRLR and the left eye control signal CTRLL for controlling the right eye image transmission portion 212 and the left eye image transmission portion 214 of the shutter glasses 400 based on the information of the interrupt register Ri and the subcount value Csub supplied from the counter 261. The shutter opening/closing control portion 443 corresponds to the comparison portion 235 and the shutter opening/closing control portion 236 shown in FIG. 3.

By constructing the shutter control portions 310, 410 in this way, even if the display device 300 does not indicate an opening/closing operation whenever the shutter glasses 400 perform such a shutter opening/closing operation, the shutter glasses 400 can control opening and closing of the right eye image transmission portion 212 and/or the left eye image transmission portion 214 by calculating the next opening/closing timing. That is, the display device 400 is capable of carrying out radio transmission of opening/closing instructions to the shutter glasses 300 with a longer interval than the shutter opening/closing interval.

Here, the display device 300 corresponds to a specific example of a "video display device" for the present invention. The RF communication portion 234, the reception-side count value latch circuit 262, the reception-side count value holding portions 464a, 464b, the count value acquiring portion 263, and the transmission-side count value holding portions 465a, 465b correspond to specific examples of a "reception portion" for the present invention. The power control portion 443 corresponds to a specific example of a "control portion" for the present invention. The shutter timing calculating portion 432 corresponds to a specific example of an "opening/closing timing calculation portion" for the present invention.

Operation and Effects

Next, the operation and effects of the video display system 20 according to the present embodiment will be described.

Overall Operation Summary

In the shutter control portion 310 of the display device 300, first the oscillation circuit 131 generates the standard clock Clk. The counter 161 generates the standard count value Cnt based on the standard clock Clk. The timing generation interval control portion 163 generates the transmission timing of the regular packet P. The transmission timing generating portion 164 notifies the count value latch circuit 162 and the packet generating portion 365 of the transmission timing of the regular packet P. The count value latch circuit 162 latches the standard count value Cnt at the transmission timing of the regular packet P and generates the transmission-side count value Ctr. The vertical synchronization latch circuit 133 latches the standard count value Cnt at timing of rises and falls in the supplied standard synchronization signal Sync. The packet generating portion 365 generates the regular packet P based on the information supplied from the count value latch circuit 162 and the vertical synchronization latch circuit 133. The RF communication portion 134 transmits the regular packet P by broadcasting.

In the shutter control portion 410 of the shutter glasses 400, first the oscillation circuit 231 generates the subclock SubClk. The counter 261 generates the subcount value Csub based on the subclock SubClk. The RF communication portion 234 receives the regular packet P transmitted from the display device 300. The reception-side count value latch circuit 262 latches the subcount value Csub at the timing when the RF communication portion 234 received the regular packet P and generates the reception-side count value Crec. The reception-side count value holding portions 464a, 464b hold the reception-side count value Crec. The count value acquiring portion 263 acquires the transmission-side count value Ctr included in the regular packet P received by the RF communication portion 234. The transmission-side count value holding portions 465a, 465b hold the transmission-side count value Ctr. The standard synchronization information acquiring portion 411 acquires the standard synchronization information A2 included in the regular packet P received by the RF communication portion 234. The standard synchronization information holding portions 412a, 412b hold the standard synchronization information A2. The packet transmission interval acquiring portion 413 acquires the transmission timing interval RP of the regular packet P included in the regular packet P received by the RF communication portion 234. The difference acquiring portion 466a selects two reception-side count values Crec from the reception-side count value latch circuit 262 and the reception-side count value holding portions 464a, 464b, and finds the difference therebetween. The difference acquiring portion 466b selects two transmission-side count values Ctr from the count value acquiring portion 263 and the transmission-side count value holding portions 465a, 465b, and finds the difference therebetween. The count value difference amount calculating portion 421 finds the difference amount D. The clock interval correction amount calculating portion 422 finds the clock interval correction amount R. The transmission timing calculating portion 431 finds the next transmission timing of the regular packet P with the standard count value Cnt as a standard and the count value converting portion 441 converts such timing to a value with the subcount value Csub as a standard. The shutter timing calculating portion 432 finds the next shutter opening/closing timing with the standard count value Cnt as a standard and the count value converting portion 442 converts such timing to a value with the subcount value Csub as a standard. The power control portion 443 sets the power of the shutter glasses 400 in an on state in accordance with the next transmission timing of the regular packet P and the next shutter opening/closing timing and in a sleep state at other times. The shutter opening/closing control portion 444 controls the right eye image transmission portion 212 and the left eye image transmission portion 214.

Next, the overall operation of the video display system 20 will be described with reference to a number of sequence charts.

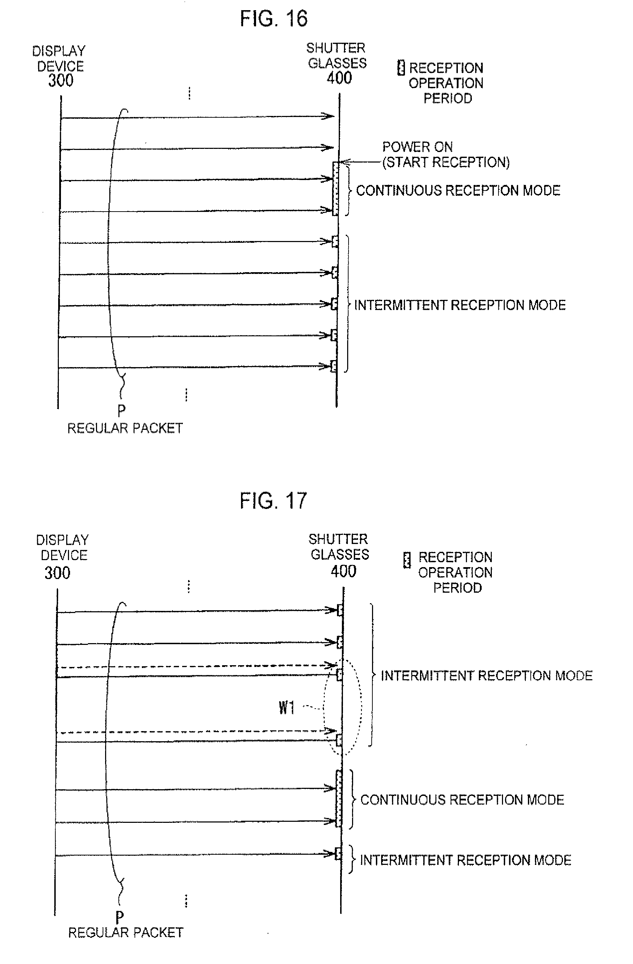

FIG. 16 shows one example of a communication operation in the video display system 20 by way of a sequence chart. The display device 300 transmits the regular packet P by broadcasting at fixed intervals (for example, 500msec). The power of the shutter glasses 400 is set in an on state at given timing and first starts to operate as continuous reception mode. In this example, after two regular packets have been received, the shutter glasses 400 then find the transmission timing of the next regular packet P from the display device 300 and move from continuous reception mode to intermittent reception mode. In intermittent reception mode, the shutter glasses 40 set reception timing slots so as to match the transmission timing of the regular packet P and set the power in the on state, receive the regular packet P and also carry out processing such as calculation of the next transmission timing, and when such processing ends, operate so as to set a sleep state where hardly any power is consumed. In this intermittent reception mode, the time of the reception time slot is around 5msec for example. Note that although the power is set in the on state only at the timing where the regular packets P are received in FIG. 16 for ease of explanation, the shutter glasses 400 operate so that the power is set in the on state also at the shutter opening/closing timing.

In this way, in the video display system 20, after first receiving two regular packets in continuous reception mode, the shutter glasses 400 move to intermittent reception mode. In intermittent reception mode, the shutter glasses 400 set the power in the on state to enter a reception possible state in accordance with the timing at which the regular packet P is received and the shutter opening/closing timing, and enter a sleep state at other times. By doing so, it is possible to reduce the time during which the power is in the on state and to realize low power consumption for the shutter glasses 400.

Also, in the video display system 20, the display device 300 transmits the regular packet P by broadcasting. Therefore, as one example, in a case where a plurality of pairs of shutter glasses 400 are used, such as when 3D video is displayed in a cinema, the respective shutter glasses 400 operate based on the regular packets P transmitted by broadcasting from the display device 300. That is, in the video display system 20, like the video display system 10 according to the first embodiment described above, it is unnecessary to carry out transmission and reception separately between the display device 300 and each pair of shutter glasses 400. By doing so, transmission and reception in the video display system 20 become simple and by reducing the interference between radio waves, it becomes possible to use many pairs of shutter glasses 400 at the same time.

FIG. 17 shows another example of a communication operation in the video display system 20 in a case where the transmission timing is out. When the shutter glasses 400 are operating in intermittent reception mode, if the transmission timing of the regular packet P transmitted from the display device 300 is out, there is the risk that the shutter glasses 400 will not be able to receive the regular packet P (W1). When it has not been possible to receive the regular packet P a specified number of times, the shutter glasses 400 move from intermittent reception mode to continuous reception mode. By doing so, the shutter glasses 400 become able to receive the regular packet P. When two regular packets P have then been received in continuous reception mode, the shutter glasses 400 move once again from continuous reception mode to intermittent reception mode in the same way as in FIG. 16. By doing so, the shutter glasses 400 are able to recover the communication with the display device 300.

Note that in this example, although the case where the transmission timing is out is shown, it is exactly the same when instead of this, the reception timing is out, for example. For example, in the shutter glasses 400, when the calculation that finds the next transmission timing was not carried out properly, the shutter glasses 400 will set the reception timeslots and put the power in the on state at different timing to the original transmission timing of the regular packet P. At this time, as shown in FIG. 17, there is the risk that the shutter glasses 400 will not be able to receive the regular packet P. In this case also, the shutter glasses 400 change from intermittent reception mode to continuous reception mode and by moving to intermittent reception mode once again after communication with the display device 300 has been established, it is possible to recover the communication with the display device 300.

In this way, in the video display system 20, the shutter glasses 400 have a recovery sequence composed as described above and are capable, when communication with the display device 300 has become no longer possible for whatever circumstance, to recover such communication.

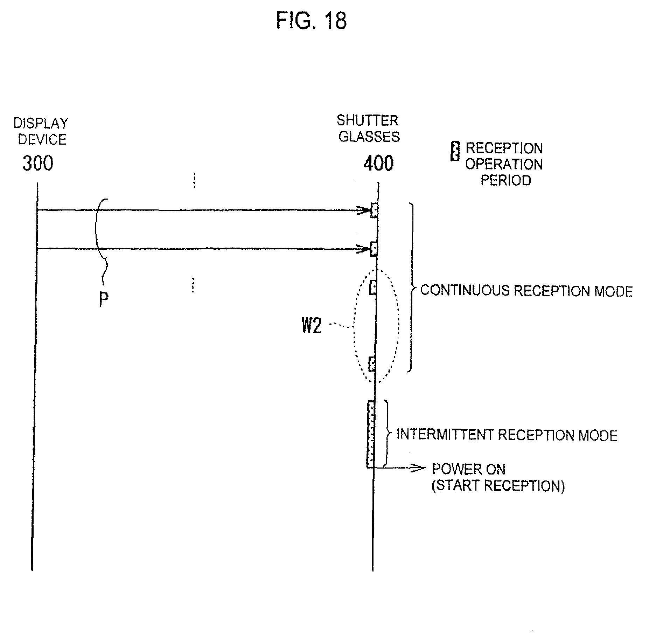

FIG. 18 shows another example of a communication operation in the video display system 20 and shows a case where transmission of the regular packet P from the display device 300 has stopped. If the transmission of the regular packet P from the display device 300 stops when the shutter glasses 400 are operating in intermittent reception mode, the shutter glasses 400 will become unable to receive the regular packet P. In the same way as in FIG. 17, if the regular packet P could not be received a specified number of times, the shutter glasses 400 move from intermittent reception mode to continuous reception mode. Here, since the display device 300 is not transmitting the regular packet P, the shutter glasses 400 will not be able to receive the regular packet P even if there is a move to continuous reception mode. In this way, when it has not been possible to receive the regular packet P even in continuous reception mode, the shutter glasses 400 judge that the regular packet P is not present and set their own power in the off state.

In this way, in the video display system 20, the shutter glasses 400 have the recovery sequence composed as described above and are capable, when the display device 300 has stopped the transmission of the regular packet P for whatever circumstance, of detecting by themselves that the regular packet P is not present and setting the power in the off state, thereby making it possible to reduce unnecessary power consumption.

Next, the detailed operation of the shutter glasses 400 will be described in detail with reference to several flowcharts.

Operation After Startup of Shutter Glasses 400

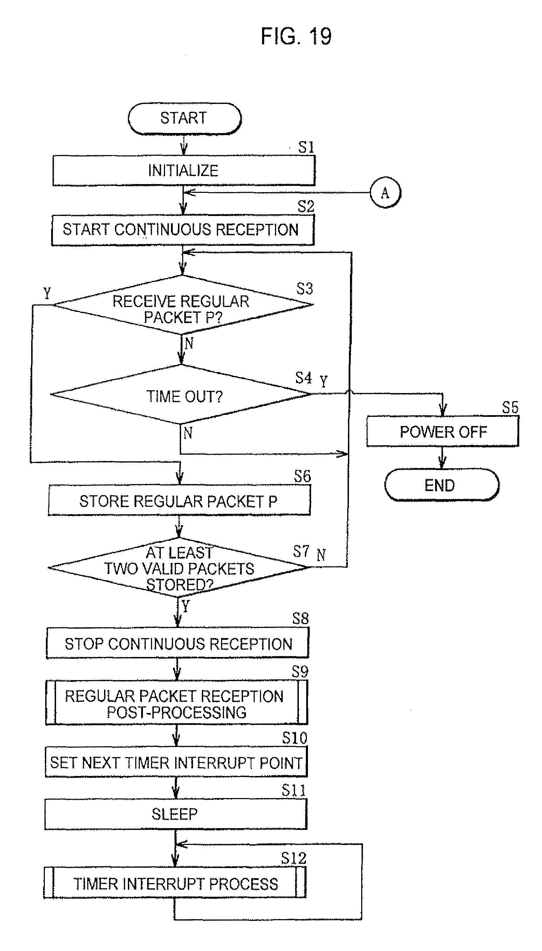

FIG. 19 shows a flowchart of an example operation after startup of the shutter glasses 400. In this flow, when the power enters the on state, the shutter glasses 400 start operation in continuous reception mode and receive regular packets P from the display device 300. When at least two regular packets P have been received, after the processing that accompanies the reception of the regular packet P has been carried out, there is a move to intermittent reception mode where sleep mode is entered and intermittent operation is carried out every time a timer interrupt process is carried out. Each step in the flow is described in detail below.

First, when the power is turned on, the shutter glasses 400 carry out a specified initialization operation (step S1) and after that start continuous reception (step S2). By doing so, the shutter glasses 400 start to operate in continuous reception mode and become able to receive the regular packet P transmitted from the display device 300.

Next, the shutter glasses 400 judge whether the regular packet P has been received (step S3). More specifically, the RF communication portion 234 judges whether the regular packet P has been received. If the regular packet P has been received, there is a jump to step S6. When the regular packet P has not been received, the shutter glasses 400 judge whether there has been a time out by comparing with a specified time (step S4). When there has not been a time out, there is a return to step S3 and it is judged whether the regular packet P has been received. When there has been a time out, the shutter glasses 400 judge that the regular packet P is not present and the power of the shutter glasses 400 is set in the off state (step S5).

In step S3, when the regular packet P has been received, the shutter glasses 400 store such regular packet P (step S6). More specifically, first, when the RF communication portion 234 receives the regular packet P, at such reception timing the reception-side count value latch circuit 262 latches the subcount value Csub and outputs as the reception-side count value Crec. The reception-side count value holding portion 464a reads and holds (stores) the reception-side count value Crec once every time the regular packet P has been received a specified number of times. When doing so, the value that was stored in the reception-side count value holding portion 464a is transferred to the reception-side count value holding portion 464b. Next, the count value acquiring portion 263 acquires the RC (transmission-side count value Ctr) of the real time synchronization information A1 from the regular packet P received by the RF communication portion 234 and the transmission-side count value holding portion 465a holds (stores) the acquired value once every time the regular packet P has been received a specified number of times. When doing so, the value that was held in the transmission-side count value holding portion 465a is transferred to the transmission-side count value holding portion 465b. Also, the packet transmission interval acquiring portion 413 acquires the RP (the transmission timing interval of the regular packet P) of the real time synchronization information A1. The standard synchronization information acquiring portion 411 then acquires the standard synchronization information A2 and the standard synchronization information holding portion 412a holds (stores) the acquired information once every time the regular packet P has been received a specified number of times. When doing so, the value that was held in the standard synchronization information holding portion 412a is transferred to the standard synchronization information holding portion 412b.

Next, the shutter glasses 400 judge whether at least two valid regular packets P are stored (step S7). If at least two are stored, there is a jump to step S8, while if at least two are not stored, there is a return to step S3.

Reception and storage of the regular packet P at the shutter glasses 400 will now be described here.

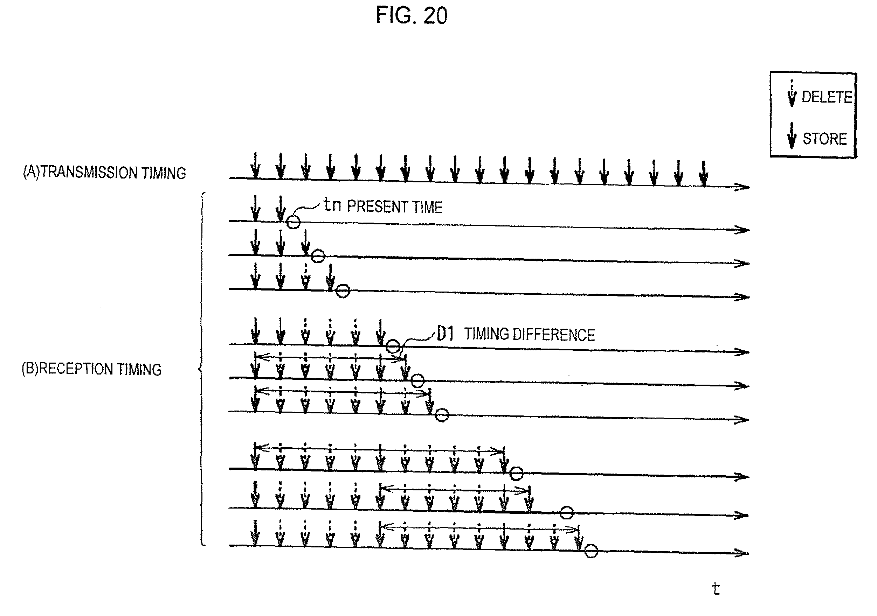

FIG. 20 schematically shows the timing of the regular packets P transmitted and received in the video display system 20, with (A) showing the transmission timing at the display device 300 and (B) showing the reception timing at the shutter glasses 400. In FIG. 20(B), various present times tn are imagined and the regular packets P received at or before such present times tn are shown. When the regular packets P transmitted from the display device 300 are received, the shutter glasses 400 do not store all of the regular packets P that have been received and instead delete regular packets that have just been received until the time interval from the newest regular packet that has been stored is a specified interval (in this example, equivalent to five times the transmission interval of the regular packet P), at which point the regular packet that has been received is stored. When the specified interval has been reached, the oldest regular packet is deleted and the received regular packet is held. By doing so, out of the three regular packets P that are stored, aside from immediately after the power has been turned on, the timing difference D1 between the newest stored packet and the oldest stored packet will be a time that is at least six times the transmission interval of the regular packet P in this example. This timing difference D1 is calculated by the difference acquiring portions 446a, 446b and is used to calculate the clock interval correction amount R. The larger the timing difference D1, the greater the precision of the calculation using the clock interval correction amount R carried out next. In this way, the larger the interval for storing the regular packets P, the greater the timing difference D1, so that the precision of calculation can be increased.

Next, the shutter glasses 400 stop the continuous reception (step S8). By doing so, as described later, the shutter glasses 400 move from continuous reception mode to intermittent reception mode.

Next, the shutter glasses 400 carry out regular packet reception post-processing S9 (step S9). More specifically, although described in detail later, a calculation process is carried out based on the information of the received regular packet P and the results are stored in the transmission timing register Rtr and the shutter timing register Rsh (see FIG. 15).

Next, the shutter glasses 400 set the next timer interrupt point (step S10). More specifically, the power control portion 443 stores, out of the five next timing information composed of the next transmission timing stored in the transmission timing register Rtr, the next opening operation timing of the left eye image transmission portion, the next closing operation timing of the left eye image transmission portion, the next opening operation timing of the right eye image transmission portion, and the next closing operation timing of the right eye image transmission portion that are stored in the shutter timing register Rsh, the information with the first timing to arrive in the interrupt register Ri. By doing so, in the interrupt register Ri, timing information on the first timing to arrive out of the five next timing information is stored as the interrupt timing and the type of such timing information is stored as the interrupt type.

Next, the shutter glasses 400 enter a sleep state (step S11). More specifically, the power control portion 443 constantly monitors the subcount value Csub and sets the shutter glasses 400 in the sleep state until the subcount value Csub becomes the value of the interrupt timing of the interrupt register Ri.

The shutter glasses 400 then carry out a timer interrupt process when a timer interrupt has occurred (step S12). More specifically, as described later, when the subcount value Csub matches the value of the interrupt timing of the interrupt register Ri (time interrupt generation), the power control portion 443 sets the power of the shutter glasses 400 in the on state and carries out processing based on the interrupt timing and the interrupt type of the interrupt register Ri, and after such processing ends enters the sleep state again. That is, the shutter glasses 400 operate in intermittent reception mode that carries out intermittent operation every time the timer interrupt process is carried out.

After this, the shutter glasses 400 repeat step S12.

Regular Packet Reception Post-Processing

Next, the subroutine of the regular packet reception post-processing (step S9) in the flow of the shutter glasses 400 shown in FIG. 19 will be described.

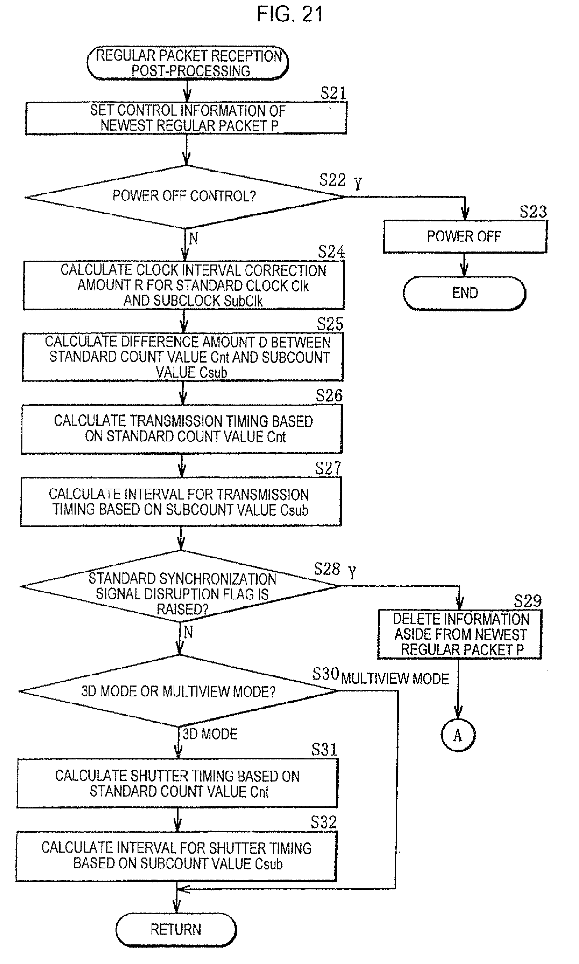

FIG. 21 shows a flowchart of the regular packet reception post-processing. In this flow, based on the various information of the stored regular packet P, the shutter glasses 400 calculate the transmission timing and the shutter timing based on the standard count value Cnt and then convert those to values based on the subcount value Csub. The respective steps in the flow are described in detail below.

First, the shutter glasses 400 set the control information of the newest regular packet P (step S21). More specifically, when the received regular packet P is stored, the RF communication portion 234 stores the control information B included in the regular packet P in a control information register, not shown. The shutter glasses 400 start to operate based on this stored information. The shutter glasses 400 confirm whether the control information indicates a power off (step S22) and if the information indicates a power off, set their own power in an off state (step S23).

Next, the shutter glasses 400 calculate the clock interval correction amount R for the standard clock Clk and the subclock SubClk (step S24). More specifically, first, the difference acquiring portion 466a finds a difference based on two values out of the count values held in the reception-side count value latch circuit 262 and the reception-side count value holding portions 464a, 464b. The difference acquiring portion 466b finds a difference based on two values out of the count values held in the count value acquiring portion 263 and the transmission-side count value holding portions 465a, 465b. The clock interval correction amount calculating portion 422 then finds the clock interval correction amount R using the following equation based on the information supplied from the difference acquiring portions 466a, 466b.

$$R = (Rdiff2 - Rdiff1)/Rdiff2 \quad \dots (1)$$

Here, "Rdiff1" is the calculation result of the difference acquiring portion 466a and corresponds to the timing difference D1 of the reception-side count value Crec. "Rdiff2" is the calculation result of the difference acquiring portion 466b and corresponds to the timing difference D1 of the transmission-side count value Ctr.

Next, the shutter glasses 400 calculate the difference amount D between the standard count value Cnt and the subcount value Csub (step S25). More specifically, the count value difference amount calculating portion 421 finds the difference amount D using the following equation based on the count values latched in the reception-side count value latch circuit 262 and the count value acquiring portion 263.

$$D = (Crec3 - Ctr3) - Cdiff \quad \dots (2)$$

Here, "Crec3" is the output value of the reception-side count value latch circuit 262 and is the reception-side count value Crec for the newest regular packet P. "Ctr3" is the output value of the count value acquiring portion 263 and is the transmission-side count value Ctr for the newest regular packet P. "Cdiff" shows the time after the standard count value Cnt has been latched by the count value latch circuit 162 on the display device 300 side until the subcount value Csub is latched by the reception-side count value latch circuit 262 on the shutter glasses 400 side, with the standard count value Cnt as a standard. That is, Cdiff expresses the delay time composed of the generation of the regular packet P by the packet generating portion 365, transmission by the RF communication portion 134, communication between the RF communication portion 134 and the RF communication portion 234, reception by the RF communication portion 234, and the like.

Next, the shutter glasses 400 carry out transmission timing calculation based on the standard count value Cnt (step S26). More specifically, based on the transmission-side count value Ctr and the transmission timing interval RP of the regular packet P, the transmission timing calculating portion 431 finds the timing at which the display device 300 will transmit the next regular packet P with the standard count value Cnt as a standard. That is, the transmission timing calculating portion 431 uses the transmission-side count value Ctr of the newest regular packet P held by the count value acquiring portion 263 and the transmission timing interval RP held by the packet transmission interval acquiring portion 413 to find the next transmission timing ttr using the following equation.

$$ttr = Ctr + RP \quad \dots (3)$$

The transmission timing calculating portion 431 then supplies the next transmission timing ttr of the regular packet P and the transmission timing interval RP of the regular packet P to the count value converting portion 441.

Next, the shutter glasses 400 calculate the transmission timing and interval based on the subcount Csub (step S27). More specifically, the count value converting portion 441 uses the difference amount D calculated by the count value difference amount calculating portion 421 and the clock interval correction amount R supplied from the clock interval correction amount calculating portion 422 to convert the next transmission timing and the transmission timing interval supplied from the transmission timing calculating portion 431 to values with the subcount value C as a standard.

The conversion of the timing tnt based on the standard count value Cnt to the timing tsub based on the subcount value Csub can normally be carried out according to the following equation.

$$tsub = tnt + D + (tnt - Ctr3) \times R \quad \dots (4)$$

Here, Ctr3 is the same as in Equation 2, and is the transmission-side count value Ctr for the newest regular packet P. Note that the third term $((tnt-Ctr3) \times R)$ on the right side is a correction term for reducing the calculation error and may be omitted depending on the desired calculation precision.

Also, the conversion of the timing Tnt based on the standard count value Cnt to the timing Tsub based on the subcount value Csub can be carried out according to the following equation.

$$Tsub = Tnt \times (1+R) \ldots (5)$$

The count value converting portion 441 finds the next transmission timing based on the subcount value Csub by substituting the next transmission timing ttr supplied from the transmission timing calculating portion 431 into the timing tnt in Equation 4. The count value converting portion 441 also finds the transmission timing interval based on the subcount value Csub by substituting the transmission timing interval RP supplied from the transmission timing calculating portion 431 into Tnt in Equation 5. The count value converting portion 441 then stores such calculation results in the transmission timing register Rtr.

Next, the shutter glasses 400 confirm whether the standard synchronization signal disruption flag has been raised (step S28). More specifically, the standard synchronization information acquiring portion 411 investigates a flag Sf1 included in the received regular packet P and confirms whether the flag has been raised. If the flag has not been raised, there is a jump to step S30. If the flag has been raised, since the standard synchronization signal Sync has been greatly disrupted, the shutter glasses 400 judge that it is not possible to use the regular packets P received in the past in subsequent timing calculations and delete all information aside from the newest regular packet P (step S29). That is, the shutter glasses 400 delete all of the information held in the reception-side count value holding portions 464a, 464b, the transmission-side count value holding portions 465a, 465b, and the standard synchronization information holding portions 412a, 412b. After this, there is a return to step S2 (FIG. 19) and a start of operation in continuous reception mode.

Next, the shutter glasses 400 judge whether the operation mode is 3D mode or multiview mode (step S30). More specifically, the shutter glasses 400 confirm the operation mode based on the control information register (not shown) mentioned earlier. When the operation mode is 3D mode, there is a jump to step S31 and when the operation mode is multiview mode, this subroutine ends.

Next, the shutter glasses 400 carry out shutter timing calculation based on the standard count value Cnt (step S31). More specifically, based on the standard synchronization information A2, the shutter timing calculating portion 432 finds the next opening/closing timing of the shutter glasses 400 (the next opening operation timing of the left eye image transmission portion, the next closing operation timing of the left eye image transmission portion, the next opening operation timing of the right eye image transmission portion, and the next closing operation timing of the right eye image transmission portion) with the standard count value Cnt as a standard. Also, the shutter timing calculating portion 432 also finds the shutter opening/closing interval together with this next shutter opening/closing timing. Although the calculation equations are not described in detail here, it is possible to implement such calculation using typical extrapolation calculations. The shutter timing calculating portion 432 then supplies the next shutter opening/closing timing and the shutter opening/closing interval to the count value converting portion 442.

Next, the shutter glasses 400 calculate the shutter timing and the interval based on the subcount value Csub (step S32). More specifically, the count value converting portion 442 uses the difference amount D supplied from the count value difference amount calculating portion 421 and the clock interval correction amount R supplied from the clock interval correction amount calculating portion 422 to convert the shutter timing and the next shutter opening/closing interval supplied from the transmission timing calculating portion 431 to values with the subcount value Csub as a standard.

The count value converting portion 442 finds the next opening/closing timing based on the subcount value Csub by respectively substituting the next opening/closing timing (the next opening operation timing of the left eye image transmission portion, the next closing operation timing of the left eye image transmission portion, the next opening operation timing of the right eye image transmission portion, and the next closing operation timing of the right eye image transmission portion) supplied from the shutter timing calculating portion 432 into the timing tnt of Equation 4. Also, the count value converting portion 442 finds the shutter opening/closing interval based on the subcount value Csub by substituting the shutter opening/closing interval supplied from the shutter timing calculating portion 432 into Tnt in Equation 5. The count value converting portion 442 then stores the calculation results in the shutter timing register Rsh.

By operating as described above, the subroutine ends.

Timer Interrupt Process

Next, the subroutine of the timer interrupt process (step S12) in the flow of the shutter glasses 400 shown in FIG. 19 will be described.

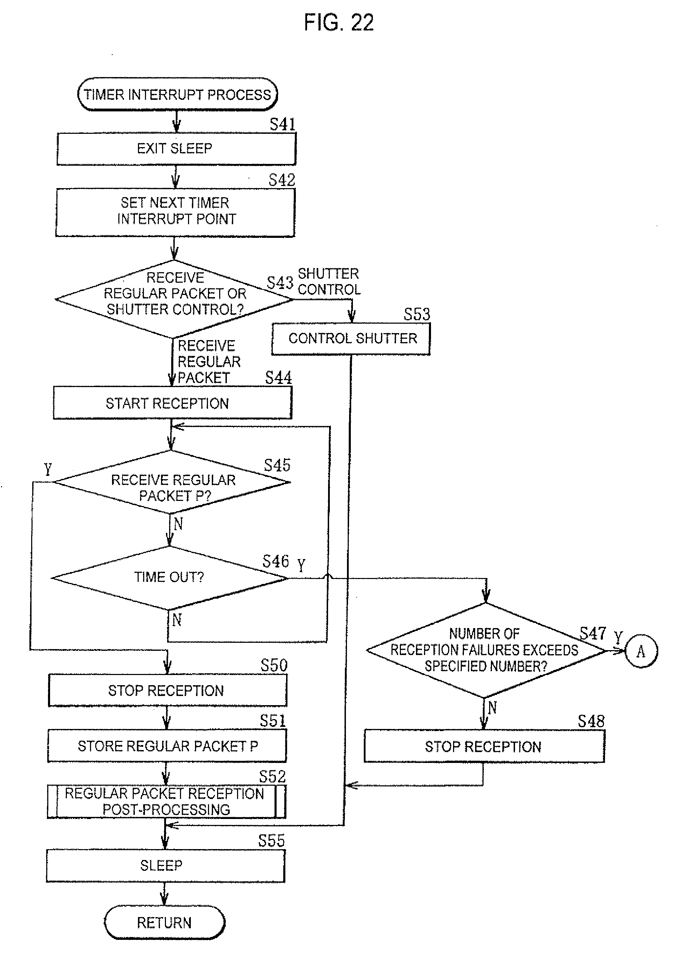

FIG. 22 shows a flowchart of the timer interrupt process. In this flow, when a timer interrupt has occurred, the shutter glasses 400 carry out a reception operation if the interrupt relates to reception of the regular packet P and control the shutters if the interrupt relates to shutter control, and enters the sleep state again when such processes have ended. The respective steps in the flow are described in detail below.

First, when a timer interrupt has occurred, the shutter glasses 400 awake from the sleep (step S41). More specifically, when the subcount value Csub matches the value of the interrupt timing of the interrupt register Ri, the power control portion 443 starts the timer interrupt process and wakes the shutter glasses 400 from the sleep.

Next, the shutter glasses 400 set the next timer interrupt point (step S42). More specifically, the power control portion 443 selects the timing information out of the five next timing information stored in the transmission timing register Rtr and the shutter timing register Rsh, that is, the next transmission timing of the regular packet P, the next opening operation timing of the left eye image transmission portion, the next closing operation timing of the left eye image transmission portion, the next opening operation timing of the right eye image transmission portion, and the next closing operation timing of the right eye image transmission portion, whose timing is first to arrive and stores such timing in the interrupt register Ri. When doing so, regarding the interrupt type of the interrupt register Ri, the information before such updating is temporarily held in another register for step S43, described later. The power control portion 443 then updates the selected timing information and stores in the transmission timing register Rtr or the shutter timing register Rsh. More specifically, as one example, if the next transmission timing has been selected, the value of the transmission timing interval stored in the transmission timing register Rtr is added to the value of such transmission timing and the result is stored as the next transmission timing in the transmission timing register Rtr. Also, as one example, if the next opening operation timing of the left eye image transmission portion has been selected, the value of the shutter opening/closing interval stored in the shutter timing register Rsh is added to the value of such timing and the result is stored as the next opening operation timing of the left eye image transmission portion in the shutter timing register Rsh.

Note that when setting the next timer interrupt point, if the timing of the next timing information whose timing is first to arrive is the same as or is sufficiently close to one out of the other four next timing information, it is preferable to prioritize opening/closing timing. More specifically, if the transmission timing of the regular packet P arrives next and as one example, the next opening operation timing of the left eye image transmission portion is substantially the same as the value of such transmission timing, it is preferable to store the next opening operation timing of the left eye image transmission portion in the interrupt register Ri. That is, when it is not possible to execute both timer interrupt processes due to the timings being close, by prioritizing the opening/closing timing, it is possible to reliably implement the opening/closing operation of the shutters.

Next, the shutter glasses 400 judge whether the timer interrupt relates to reception of the regular packet P or relates to shutter control (step S43). More specifically, the shutter glasses 400 make such judgment based on the information on the interrupt type that was temporarily held in step S42. In the case of regular packet reception, there is a jump to S44 and in the case of shutter control, there is a jump to step S51.

In step S43, if the timer interrupt relates to regular packet reception, the shutter glasses 400 start reception (step S44).

Next, the shutter glasses 400 determine whether the regular packet P has been received (step S45). More specifically, the RF communication portion 234 judges whether the regular packet P has been received. If the regular packet P has been received, there is a jump to step S48. If the regular packet P has not been received, the shutter glasses 400 judge whether there has been a time out by comparing with a specified time (step S46). If there has not been a time out, there is a return again to step S45 and it is judged whether the regular packet P has been received. If there has been a time out, the shutter glasses 400 judge that reception of the regular packet P has failed and the shutter glasses 400 judge whether the number of reception failures is over a specified number (step S47). If the number of reception failures is not over the specified number, the shutter glasses 400 stop reception (step S48) and proceed to step S55. If the number of reception failures is over the specified number, there is a return to step S2 (FIG. 19), and operation starts in continuous reception mode. These operations correspond to the operations shown in FIG. 17.

If a regular packet has been received in step S45, the shutter glasses 400 stop the reception (step S50).

Next, the shutter glasses 400 store the regular packet P (step S51). The operation in this step is the same as step S6 shown in FIG. 19.

Next, the shutter glasses 400 carry out the regular packet reception post-processing (step S52). The operation in this step is the same as step S9 shown in FIG. 19 and the shutter glasses 400 operate as shown in FIG. 21.

In step S43, when the timer interrupt relates to shutter control, the shutter glasses 400 carry out shutter control (step S53). More specifically, based on the information of the interrupt register Ri and the subcount value Csub supplied from the counter 261, the shutter opening/closing control portion 444 generates the right eye control signal CTRLR and the left eye control signal CTRLL (FIG. 4) for controlling the right eye image transmission portion 212 and the left eye image transmission portion 214. The right eye image transmission portion 212 and the left eye image transmission portion 214 carry out opening/closing operations of the shutters based on such signals.

Next, the shutter glasses 400 enter the sleep state (step S11). The operation in this step is the same as step S11 shown in FIG. 19.

By doing so, this subroutine ends.

Effects

As described above, in the present embodiment, since the transmission timing of the regular packet P from the display device 300 is found based on the standard count value Cnt of the display device 300 and the subcount value Csub of the shutter glasses 400, it is possible for the shutter glasses 400 to set the reception time slots and enter the reception possible state in accordance with the transmission timing and to enter the sleep state that has hardly any power consumption at other times, thereby making it possible to greatly reduce the power consumption of the shutter glasses 400.

Also, in the present embodiment, since the opening/closing timing of the shutters is found at the shutter glasses 400 based on the standard count value Cnt of the display device 300 and the subcount Csub of the shutter glasses 400, it is possible for the shutter glasses 400 to carry out free-running opening and closing operations of the liquid crystal shutters even when individual timing signals or the like are not transmitted from the display device 100 in accordance with the opening/closing timing of the liquid crystal shutters.

Also, in the present embodiment, since the display device 300 regularly transmits the regular packet P to the shutter glasses 400 by broadcasting, there is no need to individually exchange information between the display device 300 and each pair of shutter glasses 400, so that simple transmission and reception can be realized. For example, when a plurality of pairs of shutter glasses 400 are used in a cinema, it is possible to use many pairs of shutter glasses 400 at the same time.

Also, in the present embodiment, since the packets are held once every specified number of times when the shutter glasses 400 hold at least two regular packets P, the calculation precision of the clock interval correction amount R is improved, and therefore it is possible to improve the calculation precision when calculating the next opening/closing timing and the next transmission timing of the regular packet P.

Also, in the present embodiment, since the shutter glasses 400 have a recovery sequence for a case where the regular packet P could not be properly received, even in a case where communication with the display device 300 could not be carried out for whatever circumstance, it is possible to recover such communication or as necessary to set the power in the off state to suppress unnecessary power consumption.

Modification

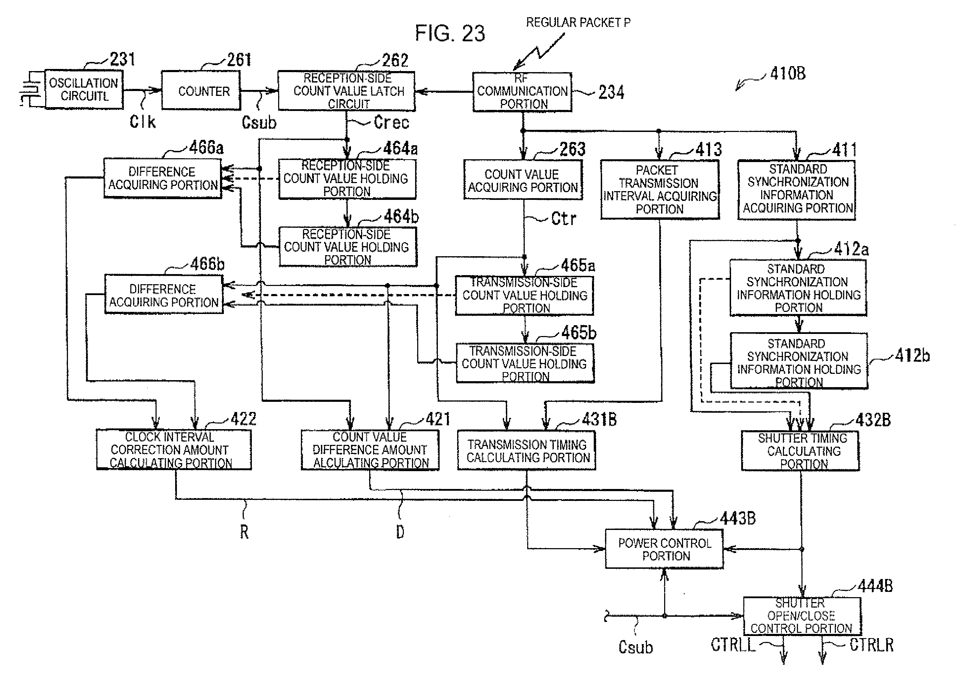

Although the count value converting portions 441, 442 are provided, the standard of the transmission timing and the shutter timing is converted from the standard count value Cnt to the subcount value Csub, and the converted transmission timing and shutter timing are respectively stored in the transmission timing register Rtr and the shutter timing register Rsh in the embodiments described above, this is not a limitation and as an alternative, as shown in FIG. 23 for example, it is possible to use a structure that does not include the count value converting portions 441, 442. In the shutter control portion 410 shown in FIG. 23, a transmission timing calculation portion 431B stores the transmission timing found with the standard count value Cnt as a standard as it is in the transmission timing register Rtr and a shutter timing calculating portion 432B stores the shutter timing found with the standard count value Cnt as a standard as it is in the shutter timing register Rsh. When setting the next timer interrupt point, a power control portion 443B selects the timing information with the next timing to arrive out of the five next timing information, converts the standard of the time of the selected timing information from the standard count value Cnt to the subcount Csub and stores as the interrupt timing. That is, the transmission timing register Rtr and the shutter timing register Rsh have the standard count value Cnt as a standard, but the interrupt register Ri has the subcount value Csub as a standard. IN this case, since the next timing is calculated from the values that have the standard count value Cnt as a standard, compared to when calculating with the subcount value Csub as a standard, it is possible to reduce the calculation error in keeping with the proximity to the original values, which makes it possible to improve the precision of timing operations.

Other Modifications

Although the display device 300 transmits the real time synchronization information A1, the standard synchronization information A2, and the control information B at the same time as the regular packet P in the embodiments described above, this is not a limitation and as one example the standard synchronization information A2 and the control information B may be transmitted as the regular packet P and the real time synchronization information A1 may be transmitted at longer intervals.

Although the display device 300 sets a valid value in the real time synchronization information A1 every time in the embodiments described above, this is not a limitation and as one example a valid value may be set with a frequency of once every several times. In such case, in the shutter glasses 400, the standard count value Cnt of the regular packet P is found by simple calculation based on the information on RC, RP included in the regular packet P obtained the previous time, and by holding such value in the count value acquiring portion 263 and/or the transmission-side count value holding portions 465a, 465b as the transmission-side count value Ctr, it is possible to carry out the same operation as in the embodiments described above.

Although the present invention has been described above by way of several embodiments and modifications, the present invention is not limited to such embodiments and the like and a variety of alterations are possible.

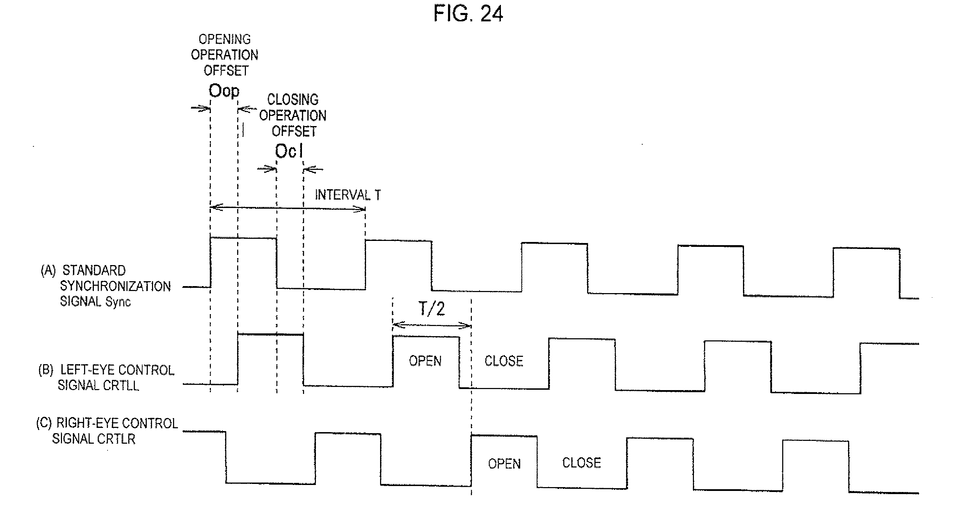

For example, although the left eye control signal CTRLL is generated at the same timing as the standard synchronization signal Sync in the embodiments and the like described above, this is not a limitation and as shown in FIG. 24, the signal may be generated at timing that is slightly shifted with respect to the standard synchronization signal Sync. In FIG. 24, an opening operation offset Oop shows the timing difference between a rise in the standard synchronization signal Sync and a rise in the left eye control signal CTRLL and a closing operation offset Ocl shows the timing difference between a fall in the standard synchronization signal Sync and a fall in the left eye control signal CTRLL. In the video display system 10 according to the first embodiment, it is possible to notify the shutter glasses 200 of the opening operation offset Oop and the closing operation offset Ocl via parameter notification from the display device 100. Also, in the video display system 20 according to the second embodiment, it is possible to notify the shutter glasses 400 of such information using the control information B of the regular packet P transmitted from the display device 300, for example.

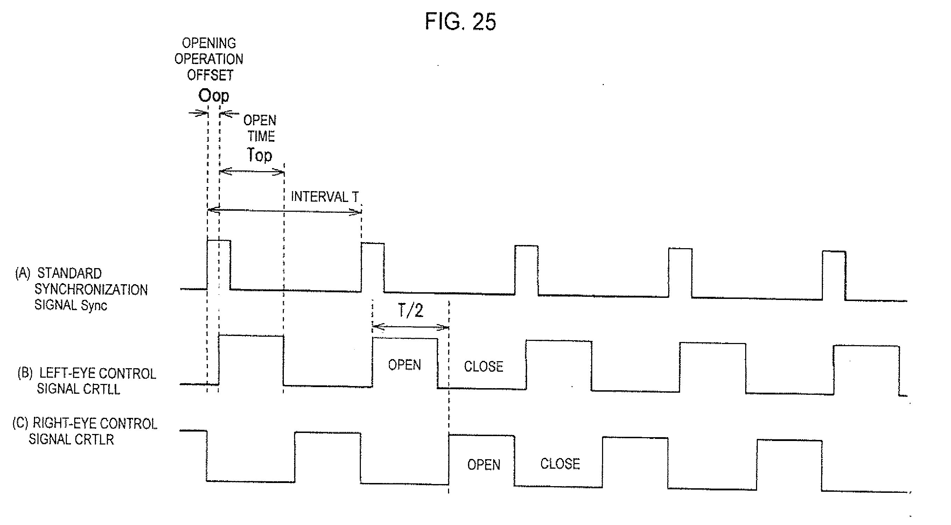

Also, as one example, although the standard synchronization signal Sync has the same waveform as the left eye control signal CTRLL in the embodiments and the like described above, this is not a limitation and as an alternative, as shown in FIG. 25, only rises in the left eye control signal CTRLL may be indicated, for example. In FIG.25, the opening operation offset Oop shows the timing difference between a rise in the standard synchronization signal Sync and a rise in the left eye control signal CTRLL and the open time Top shows the time for which the left eye control signal CTRLL is at a high level. In the video display system 10 according to the first embodiment, it is possible to notify the shutter glasses 200 of such opening operation offset Oop and open time Top by parameter notification from the display device 100, for example. Also, in the video display system 20 according to the second embodiment, it is possible to notify the shutter glasses 400 of such information using the control information B of the regular packet P transmitted from the display device 300, for example.

For example, in the embodiments and the like described above, it is possible to coexist with a remote controller that uses existing radio communication (using IEEE 802.15.4, for example). If the same standard is used for remote controller communication and communication with the shutter glasses, it is possible to add a stereoscopic display function to a display device without a large increase in the cost of the display device.

Also, as one example, although the video display systems display stereoscopic video in the embodiments and the like described above, as an alternative it is also possible to apply this to a display device that carries out so-called multiview display where different video is displayed to a plurality of viewers, for example. The operation of a video display system when carrying out multiview display to two viewers is described below.

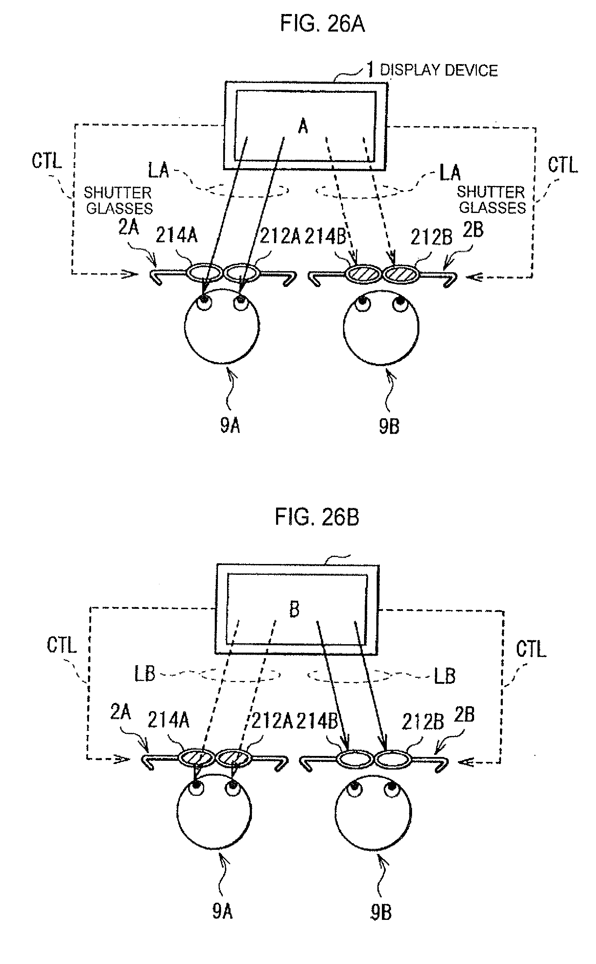

FIGS. 26A and 26B schematically show a multiview display operation, with FIG. 26A showing the operation when an image A is displayed for a viewer 9A and FIG. 26B showing the operation when an image B is displayed for a viewer 9B. A display device 1 corresponds to the display device 100 according to the first embodiment and the display device 300 according to the second embodiment. Shutter glasses 2A, 2B correspond to the shutter glasses 200 according to the first embodiment and the shutter glasses 400 according to the second embodiment. A control signal CTL is a signal indicating an opening/closing operation of shutters or the like from the display device 1 to the shutter glasses 2A, 2B, and corresponds to the packet according to the first embodiment and the regular packet P according to the second embodiment. When the display device 1 is displaying the image A, as shown in FIG. 26A, a right eye image transmission portion 212A and a left eye image transmission portion 214A of the shutter glasses 2A enter a transmission state (shutter open state) and a right eye image transmission portion 212B and a left eye image transmission portion 214B of the shutter glasses 2B enter a blocking state (shutter close state). At this time, the viewer 9A views the image A. Meanwhile, when the display device 1 is displaying the image B, as shown in FIG. 26B, the right eye image transmission portion 212A and the left eye image transmission portion 214A of the shutter glasses 2A enter the blocking state (shutter close state) and a right eye image transmission portion 212B and a left eye image transmission portion 214B of the shutter glasses 2B enter the transmission state (shutter open state). At this time, the viewer 9B views the image B. By alternately repeating such operations, it is possible for the viewer 9A to watch video composed of the image A and for the viewer 9B to watch video composed of the image B, thereby realizing a multiview system where it is possible for a plurality of viewers to watch different videos out of a plurality of videos displayed on a single display device.

Also, for example, although the display device uses a liquid crystal display device in the embodiments and the like described above, this is not a limitation and as alternative examples, it is also possible to use an EL (Electro-Luminescence) display, a plasma display, a field emission display (FED), or the like.

Also, the series of processes described in the above embodiments and the like may be carried out by hardware or may be carried out by software. In the case of execution by software, as one example, a recording medium on which a program is stored may be incorporated in the display device or the shutter glasses. Such program may then be read out and executed in order by a CPU (Central Processing Unit), a DSP (Digital Signal Processor), or another control device incorporated in the display device or the shutter glasses.

Reference Signs List

| | |
|---|---|
| 10, 20 | video display system, |
| 1, 100, 300 | display device, |
| 110 | image display portion |
| 112 | display panel, |
| 113 | gate driver, |
| 114 | data driver, |
| 115 | backlight, |
| 120 | video signal control portion |
| 130, 310 | shutter control portion (display device side) |
| 131 | oscillation circuit (display device side) |
| 132, 161 | counter (display device side) |
| 133 | vertical synchronization latch circuit |
| 134 | RF communication portion (display device side) |
| 140 | timing control portion |
| 155 | backlight control portion |
| 162 | count value latch circuit |
| 163 | timing generation interval control portion |
| 164 | transmission timing generating portion |
| 165, 365 | packet generating portion |
| 200, 400 | shutter glasses |
| 210, 410 | shutter control portion (shutter glasses side) |
| 212, 212A, 212B | right eye image transmission portion |
| 214, 214A, 214B | left eye image transmission portion |
| 231 | oscillation circuit (shutter glasses side) |
| 232, 261 | counter (shutter glasses side) |
| 233 | shutter switching value holding portion |
| 234 | RF communication portion (shutter glasses side) |
| 235 | comparison portion |
| 236 | shutter opening/closing control portion |
| 262 | reception-side count value latch circuit |
| 263 | count value acquiring portion |
| 264a, 264b, 464a, 464b | reception-side count value holding portion |
| 265a, 265b, 465a, 465b | transmission-side count value holding portion |
| 266a, 266b, 466a, 466b | difference acquiring portion |
| 267 | clock frequency control portion |
| 411 | standard synchronization information acquiring portion |
| 412a, 412b | standard synchronization information holding portion |
| 413 | packet transmission interval acquiring portion |
| 421 | count value difference amount calculating portion |
| 422 | clock interval correction amount calculating portion |
| 431 | transmission timing calculating portion |
| 432 | shutter timing calculating portion |
| 441, 442 | count value converting portion |
| 443 | power control portion |
| 444 | shutter opening/closing control portion |
| A | synchronization information |
| A1 | real time synchronization information |
| A2 | standard synchronization information |
| B | control information |
| Clk | standard clock |
| Cnt | standard count value |
| Crec | reception-side count value |

| Csub | subcount value |
| Ctr | transmission-side count value |
| CTRLL | left eye control signal |
| CTRLR | right eye control signal |
| D | difference amount |
| Ocl | closing operation offset |
| Oop | opening operation offset |
| P | regular packet |
| R | clock interval correction amount |
| Ri | interrupt register |
| Rsh | shutter timing register |
| Rtr | transmission timing register |
| SubClk | subclock |
| Sync | standard synchronization signal |
| Top | open time |

**Claims**

1. A video display device comprising:

   a display portion displaying video according to time division with a specified display interval;
   a clock counter; and
   a transmission portion transmitting a transmission time count value which is based on a value of the clock counter and is to be used, by shutter glasses that transmit or block display video of the display portion by performing opening/closing operations based on control information received in intermittent reception time slots, to set the reception time slots.

2. The video display device according to claim 1,
   wherein the control information includes an opening/closing timing value based on the value of the clock counter for indicating opening/closing timing of the shutter glasses.

3. The video display device according to claim 2,
   wherein the transmission portion transmits the opening/closing timing value together with the transmission time count value.

4. The video display device according to claim 1,
   wherein the transmission portion transmits the transmission time count value to the shutter glasses based on a request from the shutter glasses.

5. The video display device according to claim 2,
   wherein the transmission portion transmits the opening/closing timing value with a longer interval than the display interval.

6. Shutter glasses comprising:

   shutters transmitting or blocking video displayed with a specified display interval on a video display device by performing opening/closing operations based on control information;
   a clock counter;
   a reception portion acquiring, as a reception time count value, a value of the clock counter for when a transmission time count value based on a value of an internal clock counter of the video display device was received from the video display device; and
   a control portion setting intermittent reception time slots in which the reception portion receives the control information from the video display device, based on the transmission time count value and the reception time count value.

7. The shutter glasses according to claim 6,
   wherein the control information includes a first opening/closing timing value which is based on a value of the internal clock counter of the video display device and is used to indicate opening/closing timing of the shutter glasses.

8. The shutter glasses according to claim 7,
wherein the reception portion receives the first opening/closing timing value together with the transmission time count value from the video display device.

9. The shutter glasses according to claim 8,
further comprising an opening/closing timing calculation portion converting, based on the transmission time count value and the reception time count value, the first opening/closing timing value received by the reception portion to a second opening/closing timing value based on the value of the clock counter,
wherein the shutters carry out opening/closing operations based on the second opening/closing timing value.

10. The shutter glasses according to claim 9,
wherein the reception portion is capable of operating in a continuous reception mode where reception is always possible and operable when the reception portion has received the transmission time count value consecutively a specified number of times in the continuous reception mode, to move to an intermittent reception mode where a reception operation is carried out in the intermittent reception time slots.

11. The shutter glasses according to claim 10,
wherein the reception portion is operable when reception was not possible a specified number of times consecutively in the intermittent reception mode, to move to the continuous reception mode.

12. The shutter glasses according to claim 6,
wherein the control portion is operable after the reception portion has received the transmission time count value from the video display device at least twice, to find a next transmission timing from the video display device based on the transmission time count value and the reception time count value and set the reception time slots.

13. The shutter glasses according to claim 12,
wherein the reception portion holds the transmission time count value received once every specified number of times and the reception time count value corresponding thereto multiple times together with the transmission time count value received last and the reception time count value corresponding thereto, and
the control portion uses the transmission time count value and the reception time count value corresponding to a first and last reception out of the plurality of the transmission time count values and the reception time count values held by the reception portion to find a next transmission timing from the video display device and set the reception time slots.

14. The shutter glasses according to claim 13,
wherein the number of times the transmission time count value and the reception time count value are held is three.

15. The shutter glasses according to claim 7, further comprising:

   a frequency synchronization processing portion carrying out processing, based on the transmission time count value and the reception time count value, to make a clock frequency of the frequency synchronization processing portion match a clock frequency of the video display device; and
   a counter setting portion matching a value of the clock counter to a value of the internal clock counter of the video display device.

16. The shutter glasses according to claim 15, further comprising:

   a synchronization requesting portion requesting synchronization of clock frequency with the video display device to the video display device,
   wherein the frequency synchronization processing portion carries out processing based on the transmission time count value transmitted by the video display device based on a request from the synchronization requesting portion, and the reception time count value corresponding to the transmission time count value.

17. The shutter glasses according to claim 16,
wherein the reception portion operates in continuous reception mode where reception is always possible during a period where the value of the clock counter does not match the value of the internal clock counter of the video display device.

18. The shutter glasses according to claim 15,
wherein the counter setting portion is operable when the reception portion could not receive the first opening/closing timing value from the video display device consecutively a specified number of times, to request the video display device to transmit the first opening/closing timing value.

19. The shutter glasses according to claim 18,
wherein the synchronization requesting portion is operable when the first opening/closing timing value could not be received from the video display device even when the counter setting portion has requested a specified number of times consecutively, to again request the video display device for synchronization of the clock frequencies.

20. The shutter glasses according to claim 7,
wherein the reception portion receives, from the video display device and together with the first opening/closing timing value, an open time value which is based on the value of the internal clock counter of the video display device and indicates an open time of the shutters.

21. The shutter glasses according to claim 7,
wherein the reception portion receives the first opening/closing timing value with a longer interval than the display interval.

22. The shutter glasses according to claim 6,
wherein the reception portion receives the first opening/closing timing value from the video display device by radio communication.

23. The shutter glasses according to claim 22,
wherein the radio communication conforms to IEEE 802.15.4 standard.

24. A video display system comprising:

a video display device displaying video; and
shutter glasses,
wherein the video display device includes:

a display portion displaying video according to time division with a specified display interval;
a first clock counter; and
a transmission portion transmitting a transmission time count value which is based on a value of the clock counter and is to be used, by shutter glasses that transmit or block display video of the display portion by performing opening/closing operations based on control information received in intermittent reception time slots, to set the reception time slots,

and the shutter glasses include:

shutters transmitting or blocking video displayed with the specified display interval on the video display device by performing the opening/closing operations based on the control information;
a second clock counter;
a reception portion acquiring, as a reception time count value, a value of the second clock counter for when the transmission time count value based on the value of the first clock counter of the video display device was received from the video display device; and
a control portion setting the intermittent reception time slots in which the reception portion receives the control information from the video display device, based on the transmission time count value and the reception time count value.

25. A communication method comprising:

transmitting, by a video display device which displays video, a transmission time count value based on a value of a clock counter; and
acquiring, by shutter glasses which transmit or block display video of the video display device by performing opening/closing operations based on control information received in intermittent reception time slots, a value of a clock counter of the shutter glasses when the transmission time count value from the video display device is received as a reception time count value and setting the intermittent reception time slots where the reception portion receives the control information from the video display device based on the transmission time count value and the reception time count value.

FIG. 1

DISPLAY DEVICE
100

10 (20) VIDEO DISPLAY SYSTEM

110 IMAGE DISPLAY PORTION

SHUTTER GLASSES
200

LEFT EYE IMAGE
TRANSMISSION PORTION
214

RIGHT EYE IMAGE
TRANSMISSION PORTION
212

FIG. 2

VIDEO SIGNAL

SHUTTER
CONTROL
PORTION 130

VIDEO SIGNAL
CONTROL
PORTION 120

100

TIMING
CONTROL
PORTION 140

GATE DRIVER 113

114

BACKLIGHT
CONTROL
PORTION 155

112 DISPLAY
PANEL

DATA DRIVER

115
BACKLIGHT

110

214

200

212

FIG. 3

FIG. 4

(A) STANDARD SYNCHRONIZATION SIGNAL Sync

(B) LEFT-EYE CONTROL SIGNAL CRTLL

(C) RIGHT-EYE CONTROL SIGNAL CRTLR

PERIOD T

T/2

OPEN

CLOSE

EP 2 391 144 A1

39

FIG. 5

# FIG. 6

(1)SYNCHRONIZATION REQUEST — S101

(2)CLOCK FREQUENCY SYNCHRONIZATION --- S102

} BASE CLOCK FREQUENCY OF SHUTTER GLASSES AND DISPLAY DEVICE MATCH

(3)COUNTER MATCHING — S103

} COUNTER VALUES OF SHUTTER GLASSES AND DISPLAY DEVICE MATCH

TRANSMIT REGULARLY {

(4)NOTIFY OPEN/CLOSE TIMING --- S104

NOTIFY OPEN/CLOSE TIMING

CLOCK FREQUENCY SYNCHRONIZATION --- S105

NOTIFY OPEN/CLOSE TIMING

REGULARLY ACQUIRE OPENING/CLOSING TIMING AND CLOCK FREQUENCY SYNCHRONIZATION PACKETS OF 3D GLASSES LIQUID CRYSTAL SHUTTERS (INTERMITTENT RECEPTION OPERATION BASED ON COUNTER VALUE)

----▷ BROADCAST
——▷ UNICAST

EP 2 391 144 A1

EP 2 391 144 A1

## FIG. 7

# FIG. 8

```
          ┌─────────────┐
          │    START    │
          └─────────────┘
                 │
                 ▼              S111
    ┌────────────────────────────────┐
    │      REQUEST SYNCHRONIZATION    │
    └────────────────────────────────┘
                 │              S112
                 ▼
    ┌────────────────────────────────┐
    │     MATCH CLOCK FREQUENCIES     │
    └────────────────────────────────┘
                 │              S113
                 ▼
    ┌────────────────────────────────┐
    │         MATCH COUNTERS          │
    └────────────────────────────────┘
                 │              S114
                 ▼
    ┌────────────────────────────────┐
    │        NOTIFY PARAMETERS        │
    └────────────────────────────────┘
                 │              S115
                 ▼
    ┌────────────────────────────────┐
    │      MATCH SHUTTER TIMING       │
    │      CONFIRM SYNCHRONIZATION    │
    └────────────────────────────────┘
                 │
                 ▼              S116
       N    ◇─────────────────────◇
    ◄───────│ HAS SYNCHRONIZATION  │
            │ BEEN MAINTAINED?     │
            ◇─────────────────────◇
                 │ Y            S117
                 ▼
    ┌────────────────────────────────┐
    │  WAIT FOR NEXT SYNCHRONIZATION  │
    │     CONFIRMATION TIMING         │
    └────────────────────────────────┘
```

# FIG. 9

DISPLAY DEVICE
100

SHUTTER GLASSES
200

☐ : RECEPTION OPERATION PERIOD

REQUEST CLOCK FREQUENCY SYNCHRONIZATION — S121

SYNCHRONIZE CLOCK FREQUENCY — S122

SET PARAMETERS — S123

MATCH COUNTERS — S124

INITIAL OPERATION

NOTIFY OPEN/CLOSE TIMING AND PARAMETERS — S125

NOTIFY OPEN/CLOSE TIMING AND PARAMETERS — S125

REPEAT WITH A CERTAIN INTERVAL

NOTIFY OPEN/CLOSE TIMING AND PARAMETERS — S125

FOR EXAMPLE, RECEIVE FOR 5ms AT 500ms INTERVALS

ENQUIRY FOR OPEN/CLOSE TIMING AND PARAMETERS — S126

NOTIFY OPEN/CLOSE TIMING AND PARAMETERS — S125

OPERATION WHEN "NOTIFICATION OF OPEN/CLOSE TIMING AND PARAMETERS" COULD NOT BE RECEIVED (ERROR)

NOTIFY OPEN/CLOSE TIMING AND PARAMETERS — S125

NOTIFY OPEN/CLOSE TIMING AND PARAMETERS — S125

CARRY OUT SEQUENCES FROM "REQUEST CLOCK FREQUENCY SYNCHRONIZATION" WHEN SUBSEQUENT NOTIFICATION CANNOT BE RECEIVED AFTER ACQUISITION

EP 2 391 144 A1

44

# FIG. 10

VERTICAL SYNCHRONIZATION PULSE
(STANDARD SYNCHRONIZATION SIGNAL Sync)

310

133
VERTICAL
SYNCHRONIZATION
LATCH CIRCUIT

Cnt

131
OSCILLATION
CIRCUIT

Clk

161
COUNTER

162
COUNT VALUE
LATCH CIRCUIT

LATCH TRANSMISSION
TRIGGER

TIMING GENERATION
INTERVAL CONTROL
PORTION

163

TRANSMISSION
TIMING GENERATING
PORTION

164

PACKET GENERATING
PORTION

365

RF COMMUNICATION
PORTION

134

REGULAR PACKET

FIG. 11

# FIG. 12

SYNCHRONIZATION
INFORMATION
A

| REAL TIME SYNCHRONIZATION INFORMATION A1 | STANDARD SYNCHRONIZATION INFORMATION A2 | CONTROL INFORMATION B |
|---|---|---|

P
REGULAR PACKET

# FIG. 13A

A1 ────────── A2 ──────────

| RC | RP | Srise | Sfall | Snum | Sf1 | Sf2 | Sf3 |
|---|---|---|---|---|---|---|---|

~A

# FIG. 13B

| CODE | EXPLANATION |
|---|---|
| RC | STANDARD COUNT VALUE Cnt WHEN TRANSMITTING REGULAR PACKET P |
| RP | TRANSMITTING REGULAR PACKET P TRANSMISSION TIMING INTERVAL |
| Srise | STANDARD COUNT VALUE Cnt AT RISE IN STANDARD SYNCHRONIZATION SIGNAL Sync |
| Sfall | STANDARD COUNT VALUE Cnt AT FALL IN STANDARD SYNCHRONIZATION SIGNAL Sync |
| Snum | PULSE NUMBER OF STANDARD SYNCHRONIZATION SIGNAL Sync |
| Sf1 | DISRUPTION FLAG OF STANDARD SYNCHRONIZATION SIGNAL Sync |
| Sf2 | FLAG SHOWING ABSENCE OF STANDARD SYNCHRONIZATION SIGNAL Sync |
| Sf3 | FLAG SHOWING BEFORE/AFTER RELATIONSHIP OF Srise AND Sfall |

# FIG. 13C

STANDARD SYNCHRONIZATION SIGNAL Sync

INTERVAL T

Snum-1    Snum    Snum+1

STANDARD CLOCK SIGNAL Clk

Srise   Sfall

47

FIG. 14

| OPERATION MODE | 11: 3D/2D SWITCHING ACCORDING TO PRESENCE/LACK OF STANDARD SYNCHRONIZATION SIGNAL Sync<br>01: MULTIVIEW<br>00: FORCED 2D OPERATION (STANDBY) |
|---|---|
| RIGHT EYE IMAGE TRANSMISSION PORTION CONTROL | 11: OPEN/CLOSE OPERATION ACCORDING TO STANDARD SYNCHRONIZATION SIGNAL Sync<br>10: TRANSMIT (OPEN)<br>01: OPAQUE (CLOSE)<br>00: UNUSED |
| LEFT EYE IMAGE TRANSMISSION PORTION CONTROL | 11: OPEN/CLOSE OPERATION ACCORDING TO STANDARD SYNCHRONIZATION SIGNAL Sync<br>10: TRANSMIT (OPEN)<br>01: OPAQUE (CLOSE)<br>00: UNUSED |
| SHUTTER GLASSES POWER CONTROL | 11: POWER ON<br>10: STANDBY<br>01: UNUSED<br>00: POWER OFF |

# FIG. 15

EP 2 391 144 A1

SHUTTER
TIMING REGISTER
Rsh

TRANSMISSION
TIMING REGISTER
Rtr

| SHUTTER OPENING/CLOSING INTERVAL |
| --- |

| TRANSMISSION TIMING INTERVAL |
| --- |

| NEXT OPENING OPERATION TIMING OF LEFT EYE IMAGE TRANSMISSION PORTION | NEXT CLOSING OPERATION TIMING OF LEFT EYE IMAGE TRANSMISSION PORTION | NEXT OPENING OPERATION TIMING OF RIGHT EYE IMAGE TRANSMISSION PORTION | NEXT CLOSING OPERATION TIMING OF RIGHT EYE IMAGE TRANSMISSION PORTION |
| --- | --- | --- | --- |

| NEXT TRANSMISSION TIMING |
| --- |

INTERRUPT REGISTER Ri

| INTERRUPT TIMING |
| --- |

| INTERRUPT TYPE |
| --- |

49

## FIG. 16

DISPLAY DEVICE 300

SHUTTER GLASSES 400

▯ RECEPTION OPERATION PERIOD

POWER ON (START RECEPTION)

CONTINUOUS RECEPTION MODE

INTERMITTENT RECEPTION MODE

P REGULAR PACKET

## FIG. 17

DISPLAY DEVICE 300

SHUTTER GLASSES 400

▯ RECEPTION OPERATION PERIOD

INTERMITTENT RECEPTION MODE

W1

CONTINUOUS RECEPTION MODE

INTERMITTENT RECEPTION MODE

P REGULAR PACKET

# FIG. 18

DISPLAY
DEVICE
300

SHUTTER
GLASSES
400

☒ RECEPTION
   OPERATION
   PERIOD

P

W2

CONTINUOUS RECEPTION MODE

INTERMITTENT RECEPTION MODE

POWER ON
(START RECEPTION)

## FIG. 19

START

INITIALIZE — S1

A

START CONTINUOUS RECEPTION — S2

RECEIVE REGULAR PACKET P? — S3 — Y / N

TIME OUT? — S4 — Y / N

POWER OFF — S5

END

STORE REGULAR PACKET P — S6

AT LEAST TWO VALID PACKETS STORED? — S7 — N / Y

STOP CONTINUOUS RECEPTION — S8

REGULAR PACKET RECEPTION POST-PROCESSING — S9

SET NEXT TIMER INTERRUPT POINT — S10

SLEEP — S11

TIMER INTERRUPT PROCESS — S12

FIG. 20

(A) TRANSMISSION TIMING

(B) RECEPTION TIMING

tn PRESENT TIME

D1 TIMING DIFFERENCE

t

DELETE

STORE

## FIG. 21

```
        ┌─────────────────────────────┐
        │ REGULAR PACKET RECEPTION    │
        │ POST-PROCESSING             │
        └─────────────────────────────┘
                      │
                      ▼               S21
        ┌─────────────────────────────┐
        │ SET CONTROL INFORMATION OF  │
        │ NEWEST REGULAR PACKET P     │
        └─────────────────────────────┘
                      │
                      ▼               S22  Y
              ◇ POWER OFF CONTROL? ◇──────────────┐
                      │                           ▼        S23
                      │ N              ┌─────────────────────┐
                      ▼     S24        │     POWER OFF        │
        ┌─────────────────────────────┐└─────────────────────┘
        │ CALCULATE CLOCK INTERVAL    │           │
        │ CORRECTION AMOUNT R FOR     │           ▼
        │ STANDARD CLOCK Clk AND      │     ┌───────────┐
        │ SUBCLOCK SubClk             │     │   END     │
        └─────────────────────────────┘     └───────────┘
                      │     S25
                      ▼
        ┌─────────────────────────────┐
        │ CALCULATE DIFFERENCE AMOUNT │
        │ D BETWEEN STANDARD COUNT    │
        │ VALUE Cnt AND SUBCOUNT      │
        │ VALUE Csub                  │
        └─────────────────────────────┘
                      │     S26
                      ▼
        ┌─────────────────────────────┐
        │ CALCULATE TRANSMISSION      │
        │ TIMING BASED ON STANDARD    │
        │ COUNT VALUE Cnt             │
        └─────────────────────────────┘
                      │     S27
                      ▼
        ┌─────────────────────────────┐
        │ CALCULATE INTERVAL FOR      │
        │ TRANSMISSION TIMING BASED   │
        │ ON SUBCOUNT VALUE Csub      │
        └─────────────────────────────┘
                      │     S28  Y
              ◇ STANDARD SYNCHRONIZATION ◇─────────┐
              ◇ SIGNAL DISRUPTION FLAG IS ◇        ▼      S29
              ◇ RAISED?                  ◇ ┌─────────────────────┐
                      │                    │ DELETE INFORMATION  │
                      │ N                  │ ASIDE FROM NEWEST   │
                      ▼     S30            │ REGULAR PACKET P    │
              ◇ 3D MODE OR MULTIVIEW MODE? ◇       └─────────────────────┘
                      │      MULTIVIEW MODE         │
                      │ 3D MODE                     ▼
                      ▼     S31                   ( A )
        ┌─────────────────────────────┐
        │ CALCULATE SHUTTER TIMING    │
        │ BASED ON STANDARD COUNT     │
        │ VALUE Cnt                   │
        └─────────────────────────────┘
                      │     S32
                      ▼
        ┌─────────────────────────────┐
        │ CALCULATE INTERVAL FOR      │
        │ SHUTTER TIMING BASED ON     │
        │ SUBCOUNT VALUE Csub         │
        └─────────────────────────────┘
                      │
                      ▼
               ┌───────────┐
               │  RETURN   │
               └───────────┘
```

## FIG. 22

```
        ( TIMER INTERRUPT PROCESS )
                    │
                    ▼          S41
        ┌───────────────────────┐
        │       EXIT SLEEP      │
        └───────────────────────┘
                    │          S42
                    ▼
        ┌───────────────────────┐
        │     SET NEXT TIMER    │
        │    INTERRUPT POINT    │
        └───────────────────────┘
                    │
                    ▼
              ╱───────────╲   S43  SHUTTER
             ╱   RECEIVE    ╲──── CONTROL
            ╱ REGULAR PACKET OR ╲                    S53
            ╲ SHUTTER CONTROL?  ╱          ┌───────────────────────┐
             ╲               ╱             │    CONTROL SHUTTER    │
              ╲─────┬─────╱               └───────────────────────┘
                    │ RECEIVE                       │
                    │ REGULAR                       │
                    │ PACKET    S44                 │
                    ▼                               │
        ┌───────────────────────┐                  │
        │    START RECEPTION    │◄─────────┐        │
        └───────────────────────┘          │        │
                    │                       │        │
    Y               ▼          S45          │        │
   ◄──────    ╱───────────╲                │        │
   │         ╱ RECEIVE REGULAR ╲            │        │
   │         ╲   PACKET P?    ╱             │        │
   │          ╲─────┬─────╱                │        │
   │                │ N                     │        │
   │                ▼          S46  Y       │        │
   │          ╱───────────╲───────────┐    │        │
   │         ╱  TIME OUT?  ╲           │    │        │
   │          ╲─────┬─────╱            │    │        │
   │                │ N ──────────────┘     │        │
   │                │                        │        │
   ▼                ▼          S50           │        │
        ┌───────────────────────┐            │        │
        │    STOP RECEPTION     │            │        │
        └───────────────────────┘            │        │
                    │          S51           │        │
                    ▼                        │        │
        ┌───────────────────────┐            │        │
        │ STORE REGULAR PACKET P │           │        │
        └───────────────────────┘            │        │
                    │          S52           │        │
                    ▼                        │        │
        ┌───────────────────────┐            │        │
        │ REGULAR PACKET RECEPTION │         │        │
        │    POST-PROCESSING     │◄──────────┘        │
        └───────────────────────┘                     │
                    │          S55            ◄────────┘
                    ▼
        ┌───────────────────────┐
        │        SLEEP          │
        └───────────────────────┘
                    │
                    ▼
              (   RETURN   )
```

```
              ╱───────────╲   S47  Y
             ╱  NUMBER OF   ╲──────  (A)
            ╱ RECEPTION FAILURES EXCEEDS ╲
            ╲ SPECIFIED NUMBER? ╱
             ╲─────┬─────╱
                   │ N        S48
                   ▼
        ┌───────────────────────┐
        │    STOP RECEPTION     │
        └───────────────────────┘
```

FIG. 23

FIG. 24

(A) STANDARD SYNCHRONIZATION SIGNAL Sync

(B) LEFT-EYE CONTROL SIGNAL CRTLL

(C) RIGHT-EYE CONTROL SIGNAL CRTLR

OPEN

CLOSE

T/2

INTERVAL T

Ocl CLOSING OPERATION OFFSET

Oop OPENING OPERATION OFFSET

FIG. 25

(A) STANDARD
SYNCHRONIZATION
SIGNAL Sync

(B) LEFT-EYE CONTROL
SIGNAL CRTLL

(C) RIGHT-EYE CONTROL
SIGNAL CRTLR

OPEN

CLOSE

OPEN

CLOSE

T/2

INTERVAL T

OPEN
TIME
Top

OPENING
OPERATION
OFFSET
Oop

FIG. 26A

FIG. 26B

## INTERNATIONAL SEARCH REPORT

International application No.

PCT/JP2010/070488

A. CLASSIFICATION OF SUBJECT MATTER
*H04N13/04*(2006.01)i, *G02F1/13*(2006.01)i, *G02F1/133*(2006.01)i, *G09F9/00*(2006.01)i, *G09G5/12*(2006.01)i, *G09G5/36*(2006.01)i

According to International Patent Classification (IPC) or to both national classification and IPC

B. FIELDS SEARCHED

Minimum documentation searched (classification system followed by classification symbols)
H04N13/00-15/00, G02F1/13, G02F1/133, G09F9/00, G09G5/12, G09G5/36

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 8-265863 A  (Sony Corp.), 11 October 1996 (11.10.1996), abstract; claim 1; paragraphs [0008] to [0009], [0020] to [0030]; fig. 1 to 2 (Family: none) | 1-25 |
| A | JP 11-098540 A  (Sanyo Electric Co., Ltd.), 09 April 1999 (09.04.1999), paragraphs [0015] to [0043]; fig. 1 to 11 (Family: none) | 1-25 |
| A | JP 8-317423 A  (Sony Corp.), 29 November 1996 (29.11.1996), paragraphs [0052] to [0089]; fig. 1 to 5 (Family: none) | 1-25 |

☐ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
   10 February, 2011 (10.02.11)

Date of mailing of the international search report
   22 February, 2011 (22.02.11)

Name and mailing address of the ISA/
   Japanese Patent Office

Facsimile No.

Authorized officer

Telephone No.

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9138384 A
- JP 2000036969 A
- JP 2003045343 A
- JP H09138384 A